# EUROPEAN PATENT APPLICATION

(11) **EP 4 548 746 A1**
(43) Date of publication of application: **07.05.2025**
(21) Application number: 23831024.7
(22) Date of filing: 08.06.2023
(51) Int. Cl.: A01D 69/00, A01B 69/00, G01S 17/931, G05D 1/20, G06Q 50/02

(54) **WORK VEHICLE, CONTROL METHOD AND COMPUTER PROGRAM**

(30) Priority: 28.06.2022 JP 2022103962
(71) Applicant: Kubota Corporation, Osaka 556-8601 (JP)
(72) Inventor: KINOSHITA, Tomohiro, Sakai-shi, Osaka 590-0908 (JP); KURODA, Koichi, Sakai-shi, Osaka 590-0908 (JP); TAMAI, Takuya, Sakai-shi, Osaka 590-0908 (JP)
(74) Representative: Müller-Boré & Partner Patentanwälte PartG mbB
(86) International application number: PCT/JP2023/021409
(87) International publication number: WO 2024/004574

(57) **Abstract**

A work vehicle according to an embodiment performs self-traveling among a plurality of crop rows. The work vehicle includes: wheels responsible for steering; a steering device to change a steering angle of the wheels responsible for steering; an exterior sensor to output sensor data indicating a distribution of geographic features around the work vehicle; and a controller to control self-traveling of the work vehicle. The controller sets a maximum steering angle for the wheels responsible for steering based on a state of at least one of the work vehicle and a surrounding environment of the work vehicle, detects two crop rows existing on opposite sides of the work vehicle based on the sensor data, and sets a target path for the work vehicle in between the two crop rows. The controller computes a target steering angle for the wheels responsible for steering that is aimed at causing the work vehicle to follow the target path, limits a value of the target steering angle to equal to or smaller than the maximum steering angle when the computed target steering angle is greater than the maximum steering angle, and controls the steering device so that the steering angle of the wheels responsible for steering equals the target steering angle.

## Description

### TECHNICAL FIELD

The present disclosure relates to a work vehicle, a control method, and a computer program.

### BACKGROUND ART

As attempts in next-generation agriculture, research and development of smart agriculture utilizing ICT (Information and Communication Technology) and IoT (Internet of Things) is under way. Research and development is also directed to the automation and unmanned use of tractors or other work vehicles to be used in the field. For example, work vehicles which travel via automatic steering by utilizing a positioning system that is capable of precise positioning, e.g., a GNSS (Global Navigation Satellite System), are coming into practical use.

On the other hand, development of movable units which autonomously move by utilizing distance sensors, e.g., a LiDAR (Light Detection and Ranging) sensor, is also under way. For example, Patent Document 1 discloses an example of a work vehicle which performs self-traveling in between crop rows in a field by utilizing the LiDAR sensor.

### CITATION LIST

### PATENT LITERATURE

Patent Document 1: Japanese Laid-Open Patent Publication No. 2019-154379

### SUMMARY OF INVENTION

### TECHNICAL PROBLEM

When a work vehicle performs self-traveling among crop rows in a field, there is a desire to suppress its unwanted contact with the crop rows.

### SOLUTION TO PROBLEM

A work vehicle according to an illustrative embodiment of the present disclosure is a work vehicle to perform self-traveling among a plurality of crop rows, comprising: wheels responsible for steering; a steering device to change a steering angle of the wheels responsible for steering; an exterior sensor to output sensor data indicating a distribution of geographic features around the work vehicle; and a controller to control self-traveling of the work vehicle, the controller is operable to: set a maximum steering angle for the wheels responsible for steering based on a state of at least one of the work vehicle and a surrounding environment of the work vehicle; detect two crop rows existing on opposite sides of the work vehicle based on the sensor data; set a target path for the work vehicle in between the two crop rows; compute a target steering angle for the wheels responsible for steering that is aimed at causing the work vehicle to follow the target path; limit a value of the target steering angle to equal to or smaller than the maximum steering angle when the computed target steering angle is greater than the maximum steering angle; and control the steering device so that the steering angle of the wheels responsible for steering equals the target steering angle.

General or specific aspects of the present disclosure may be implemented using a device, a system, a method, an integrated circuit, a computer program, a computer-readable storage medium, or any combination thereof. The computer-readable storage medium may be inclusive of a volatile storage medium, or a non-volatile storage medium. The device may be composed of a plurality of devices. In the case where the device is composed of two or more devices, the two or more devices may be disposed within a single apparatus, or divided over two or more separate apparatuses.

### ADVANTAGEOUS EFFECTS OF INVENTION

According to an illustrative embodiment of the present disclosure, a maximum steering angle for wheels responsible for steering is set based on the state of at least one of a work vehicle and a surrounding environment of the work vehicle, and the steering angle of the wheels responsible for steering is controlled so as to be equal to or smaller than the maximum steering angle. By setting the maximum steering angle based on the state of at least one of the work vehicle and the surrounding environment, the work vehicle can be restrained from coming into contact with crop rows. By controlling the steering angle of the wheels responsible for steering so as to be equal to or smaller than the maximum steering angle, the work vehicle can be restrained from coming into contact with crop rows, and driving stability can be improved.

### BRIEF DESCRIPTION OF DRAWINGS

[FIG. **1**] A side view schematically showing an example of a work vehicle and an example of an implement linked to the work vehicle.
[FIG. **2**] A block diagram showing an example configuration of the work vehicle and the implement.
[FIG. **3A**] A schematic diagram of a LiDAR sensor as viewed in a lateral direction of the work vehicle.
[FIG. **3B**] A schematic diagram of a LiDAR sensor as viewed from vertically above.
[FIG. **4**] A block diagram showing an example configuration of the LiDAR sensor.
[FIG. **5**] A diagram schematically showing an example of an environment in which the work vehicle travels.
[FIG. **6**] A perspective view schematically showing an example of a surrounding environment of the work vehicle.
[FIG. **7**] A diagram showing schematically an example of a travel path of the work vehicle.
[FIG. **8**] A diagram describing a method of travel control for the work vehicle in an inter-row travel mode.
[FIG. **9**] A diagram describing a method of travel control for the work vehicle in an inter-row travel mode.
[FIG. **10**] A diagram showing an example of an obstacle map.
[FIG. **11**] A diagram showing another example of an obstacle map.
[FIG. **12**] A diagram for describing a process of detecting two rows of trees based on an obstacle map.
[FIG. **13**] A diagram describing a steering angle of front wheels, which are wheels responsible for steering.
[FIG. **14**] A diagram showing an operation of causing the work vehicle to follow a target path.
[FIG. **15**] A flowchart showing an example of a process of controlling the steering angle of the wheels responsible for steering.
[FIG. **16**] A diagram showing an example of a method of setting a maximum steering angle.
[FIG. **17**] A flowchart showing another example of a process of controlling the steering angle of the wheels responsible for steering.
[FIG. **18**] A diagram showing work vehicles with an implement connected thereto.
[FIG. **19**] A diagram showing wheelbases of work vehicles.
[FIG. **20**] A diagram showing another example of a method of setting the maximum steering angle θ.
[FIG. **21**] A diagram showing rows of trees.
[FIG. **22**] A diagram showing rows of trees.
[FIG. **23**] A diagram showing rows of trees and work vehicles.
[FIG. **24**] A diagram showing a work vehicle and a ground surface on which the work vehicle travels.

### DESCRIPTION OF EMBODIMENTS

### (definition of terms)

In the present disclosure, a "work vehicle" means a vehicle for use in performing work in a work area. A "work area" is any place where work may be performed, e.g., a field, a mountain forest, or a construction site. A "field" is any place where agricultural work may be performed, e.g., an orchard, an agricultural field, a paddy field, a cereal farm, or a pasture. A work vehicle can be an agricultural machine such as a tractor, a rice transplanter, a combine, a vehicle for crop management, or a riding mower, or a vehicle for non-agricultural purposes such as a construction vehicle or a snowplow vehicle. A work vehicle may be configured so that an implement (also referred to as a "task device" or a "task apparatus") that is suitable for the content of work can be attached to at least one of its front and its rear. Traveling of a work vehicle that is made while it performs work by using an implement may be referred to as "tasked travel".

"Self-driving" means controlling the travel of a vehicle based on the action of a controller, rather than through manual operation of a driver. During self-driving, not only the travel of the vehicle, but also the task operation (e.g., the operation of the implement) may also be automatically controlled. A vehicle that is traveling via self-driving is said to be "self-traveling". The controller may control at least one of steering, adjustment of traveling speed, and starting and stopping of travel as are necessary for the travel of vehicle. In the case of controlling a work vehicle having an implement attached thereto, the controller may control operations such as raising or lowering of the implement, starting and stopping of the operation of the implement, and the like. Travel via self-driving includes not only the travel of a vehicle toward a destination along a predetermined path, but also the travel of merely following a target of tracking. A vehicle performing self-driving may travel based in part on a user's instruction. A vehicle performing self-driving may operate not only in a self-driving mode but also in a manual driving mode of traveling through manual operation of the driver. The steering of a vehicle that is based on the action of a controller, rather than manually, is referred to as "automatic steering". A part or a whole of the controller may be external to the vehicle. Between the vehicle and a controller that is external to the vehicle, communication of control signals, commands, data, or the like may be performed. A vehicle performing self-driving may autonomously travel while sensing the surrounding environment, without any person being involved in the control of the travel of the vehicle. A vehicle that is capable of autonomous travel can travel in an unmanned manner. During autonomous travel, detection of obstacles and avoidance of obstacles may be performed.

An "exterior sensor" is a sensor that senses the external state of the work vehicle. Examples of exterior sensors include LiDAR sensors, cameras (or image sensors), laser range finders (also referred to as "range sensors"), ultrasonic sensors, millimeter wave radars, and magnetic sensors.

A "crop row" is a row of agricultural items, trees, or other plants that may grow in rows on a field, e.g., an orchard or an agricultural field, or in a forest or the like. In the present disclosure, a "crop row" is a notion that encompasses a "row of trees".

An "obstacle map" is local map data in which the position or a region of an object around the work vehicle is expressed in a predetermined coordinate system. A coordinate system defining an obstacle map may be a vehicle coordinate system that is fixed to the work vehicle, or a world coordinate system that is fixed to the globe (e.g. a geographic coordinate system), for example. An obstacle map may include information other than position (e.g., attribute information) of an object around the work vehicle. The obstacle map may be expressed in various formats, e.g., a grid map or a point cloud map.

### (embodiments)

Hereinafter, preferred embodiments of the present disclosure will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following preferred embodiments are only exemplary, and the technique according to the present disclosure is not limited to the following preferred embodiments. For example, numerical values, shapes, materials, steps, orders of steps, etc., that are indicated in the following preferred embodiments are only exemplary, and admit of various modifications so long as it makes technological sense. Any one implementation may be combined with another.

Hereinafter, as one example, an embodiment where the work vehicle is a tractor for use in agricultural work in a field such as an orchard will be described. Without being limited to tractors, the technique according to the present disclosure is also applicable to other type of agricultural machines such as a rice transplanter, a combine, a vehicle for crop management, or a riding lawn mower, for example. The technique according to the present disclosure is also applicable to vehicles for non-agricultural purposes such as a construction vehicle or a snowplow vehicle.

### [1. configuration]

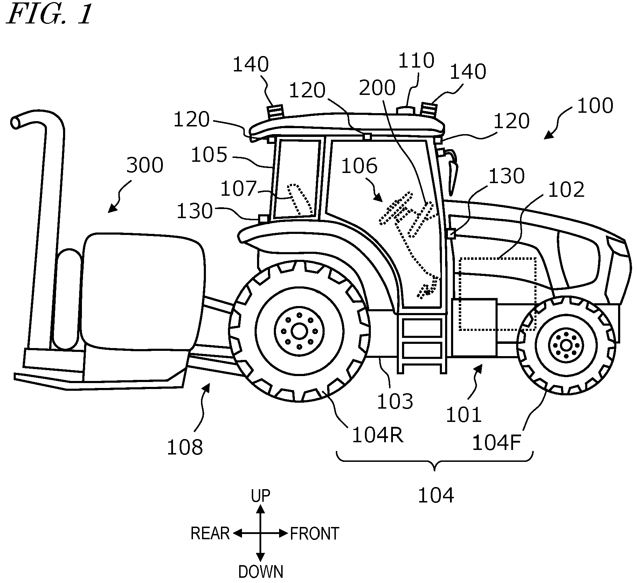

FIG. **1** is a side view schematically showing an example of the work vehicle **100** and an example of an implement **300** linked to the work vehicle **100.** The work vehicle **100** according to the present embodiment can operate both in a manual driving mode and a self-driving mode. In the self-driving mode, the work vehicle **100** is able to perform unmanned travel. The work vehicle **100** performs self-driving in an environment where a plurality of crop rows (e.g., rows of trees) are planted, e.g., an orchard such as a vineyard or an agricultural field.

As shown in FIG. **1****,** the work vehicle **100** includes a vehicle body **101,** a prime mover (engine) **102,** and a transmission **103.** On the vehicle body **101,** running gear, which includes wheels **104** with tires, and a cabin **105** are provided. The running gear includes four wheels **104,** and wheel axes to cause the four wheels to rotate, and brakes to brake on each wheel axis. The wheels **104** include a pair of front wheels **104F** and a pair of rear wheels **104R.** Inside the cabin **105,** a driver's seat **107,** a steering device **106,** an operational terminal **200,** and switches for manipulation are provided. The front wheels **104F** and/or the rear wheels **104R** may be replaced by a plurality of wheels with a track (crawlers); rather than wheels with tires, attached thereto.

The work vehicle **100** includes a plurality of exterior sensors to sense the surroundings of the work vehicle **100.** In the example of FIG. **1****,** the exterior sensors include a plurality of LiDAR sensors **140,** a plurality of cameras **120,** and a plurality of obstacle sensors **130.**

The cameras **120** may be provided at the front/rear/right/left of the work vehicle **100,** for example. The cameras **120** image the surrounding environment of the work vehicle **100** and generate image data. The images acquired with the cameras **120** may be transmitted to the terminal device, which is responsible for remote monitoring, for example. The images may be used to monitor the work vehicle **100** during unmanned driving. The cameras **120** may be provided according to the needs, and any number of them may be provided.

The LiDAR sensors **140** are one example of exterior sensors that output sensor data indicating a distribution of geographic features around the work vehicle **100.** In the example of FIG. **1****,** two LiDAR sensors **140** are disposed on the cabin **105,** at the front and the rear. The LiDAR sensors **140** may be provided at other positions (e.g., on a lower portion of a front face of the vehicle body **101**). While the work vehicle **100** is traveling, each LiDAR sensor **140** repeatedly outputs sensor data representing the distances and directions of measurement points on objects existing in the surrounding environment, or two-dimensional or three-dimensional coordinate values of such measurement points. The number of LiDAR sensors **140** is not limited to two, but may be one, or three or more.

The LiDAR sensor(s) **140** may be configured to output two-dimensional or three-dimensional point cloud data as sensor data. In the present specification, "point cloud data" broadly means data indicating a distribution of multiple reflection points that are observed with a LiDAR sensor(s) **140.** The point cloud data may contain coordinate values of each reflection point in a two-dimensional space or a three-dimensional space or information indicating the distance and direction of each reflection point, for example. The point cloud data may contain information of luminance of each reflection point. The LiDAR sensor(s) **140** may be configured to repeatedly output point cloud data with a pre-designated cycle, for example. Thus, the exterior sensors may include one or more LiDAR sensors **140** that output point cloud data as sensor data.

The sensor data that is output from the LiDAR sensor(s) **140** is processed by a controller that controls self-traveling of the work vehicle **100.** During travel of the work vehicle **100,** based on the sensor data that is output from the LiDAR sensor(s) **140,** the controller can consecutively generate an obstacle map indicating a distribution of objects existing around the work vehicle **100.** The controller may generate an environment map by joining together obstacle maps with the use of an algorithm such as SLAM (Simultaneous Localization and Mapping), for example, during self-traveling. The controller can perform estimation of the position and orientation of the work vehicle **100** (i.e., localization) by matching the sensor data against the environment map.

In an environment in which trees or crops are distributed with a high density, e.g., vineyards or other orchards or forests, leaves thriving in upper portions of the trees create canopies, each of which serves as an obstacle or a multiple reflector against radio waves from a satellite. Such an environment may hinder accurate positioning using a GNSS in some cases. In an environment where GNSS cannot be used, SLAM is used, where localization and map generation simultaneously take place. Use of SLAM allows the work vehicle **100** to travel automatically in an environment with a multitude of trees.

The plurality of obstacle sensors **130** shown in FIG. 1 are provided at the front and the rear of the cabin **105.** The obstacle sensors **130** may be disposed at other positions. For example, one or more obstacle sensors **130** may be disposed at any position at the sides, the front, or the rear of the vehicle body **101.** The obstacle sensors **130** may include, for example, laser scanners or ultrasonic sonars. The obstacle sensors **130** may be used to detect obstacles in the surroundings during self-traveling to cause the work vehicle **100** to halt or detour around the obstacles.

The work vehicle **100** further includes a GNSS unit **110.** GNSS is a collective term for satellite positioning systems such as the GPS (Global Positioning System), QZSS (Quasi-Zenith Satellite System, e.g., MICHIBIKI), GLONASS, Galileo, and BeiDou. A GNSS unit **110** receives satellite signals (also referred to as GNSS signals) that are transmitted from a plurality of GNSS satellites, and performs positioning based on the satellite signals. Although the GNSS unit **110** in the present embodiment is disposed above the cabin **105,** it may be disposed at any other position. The GNSS unit **110** includes: an antenna to receive signals from the GNSS satellites; and a processing circuit. The work vehicle **100** in the present embodiment is used in environments where multiple trees grow to make it difficult to use a GNSS, e.g., a vineyard. In such environments, the LiDAR sensor(s) **140** is mainly employed in positioning. However, in an environment where it is possible to receive GNSS signals, positioning may be performed by using the GNSS unit **110.** By combining the positioning based on the LiDAR sensor(s) **140** and the positioning based on the GNSS unit **110,** the stability or accuracy of positioning can be improved.

The GNSS unit **110** may include an inertial measurement unit (IMU). Signals from the IMU can be used to complement position data. The IMU can measure a tilt or a small motion of the work vehicle **100.** The data acquired by the IMU can be used to complement the position data based on the satellite signals, so as to improve the performance of positioning.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their steering angle (also referred to as "angle of turn") can cause a change in the traveling direction of the work vehicle **100.** The steering angle of the front wheels **104F** can be changed by manipulating the steering wheel. The power steering device includes a hydraulic device or an electric motor to supply an assisting force for changing the steering angle of the front wheels **104F.** When automatic steering is performed, under the control of the controller disposed in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided at the front portion of the vehicle body **101.** In that case, the implement can be connected at the front portion of the work vehicle **100.**

Although the implement **300** shown in FIG. **1** is a sprayer to spray a chemical agent onto a crop, the implement **300** is not limited to a sprayer. For example, any arbitrary task device such as a mower, a seeder, a spreader, a rake, a baler, a harvester, a plow, a harrow, or a rotary tiller may be connected to the work vehicle **100** for use.

The work vehicle **100** shown in FIG. **1** can be driven by human driving; alternatively, it may only support unmanned driving. In that case, component elements which are only required for human driving, e.g., the cabin **105,** the steering device **106,** and the driver's seat **107** do not need to be provided in the work vehicle **100.** An unmanned work vehicle **100** can travel via autonomous travel, or by remote manipulation by a user.

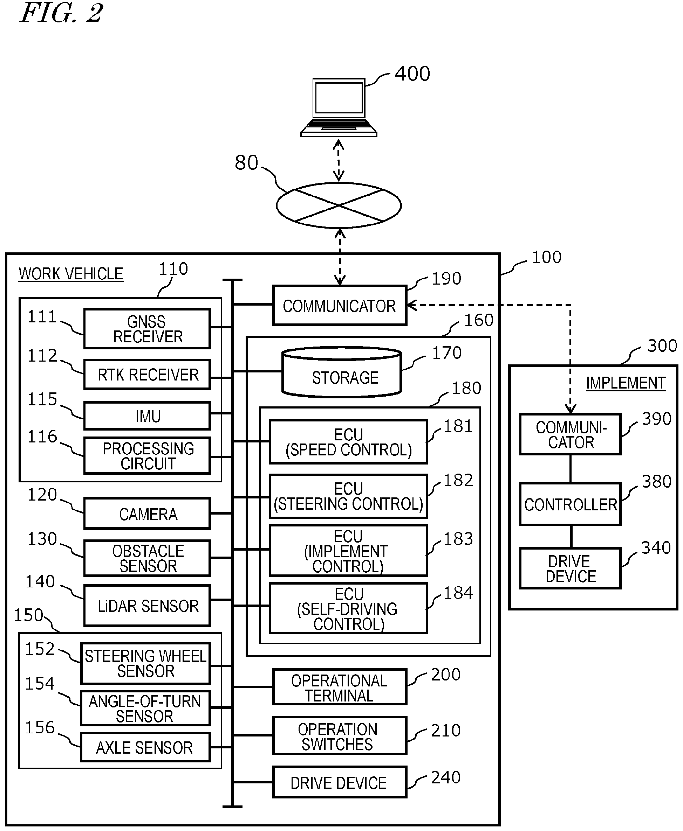

FIG. **2** is a block diagram showing an example configuration of the work vehicle **100** and the implement **300.** The work vehicle **100** and the implement **300** can communicate with each other via a communication cable that is included in the linkage device **108.** The work vehicle **100** is able to communicate with a terminal device **400** for remote monitoring via a network **80.** The terminal device **400** may be any arbitrary computer, e.g., a personal computer (PC), a laptop computer, a tablet computer, or a smartphone, for example. Via the network **80,** the work vehicle **100** may communicate with a server that keeps agricultural work under management.

In addition to the GNSS unit **110,** the camera(s) **120,** the obstacle sensors **130,** the LiDAR sensor(s) **140,** and the operational terminal **200,** the work vehicle **100** in the example of FIG. **2** includes sensors **150** to detect the operating status of the work vehicle **100,** a travel control system **160,** a communicator **190,** operation switches **210,** and a drive device **240.** These component elements are communicably connected to one another via a bus.

The GNSS unit **110** includes a GNSS receiver **111,** an RTK receiver **112,** an inertial measurement unit (IMU) **115,** and a processing circuit **116.** The sensors **150** include a steering wheel sensor **152,** an steering angle sensor **154,** and a wheel axis sensor **156.** The travel control system **160** includes a storage device **170** and a controller **180.** The controller **180** includes a plurality of electronic control units (ECU) **181 to 184.** The implement **300** includes a drive device **340,** a controller **380,** and a communicator **390.** Note that FIG. 2 shows component elements which are relatively closely related to the operations of self-driving by the work vehicle **100,** while other components are omitted from illustration. The travel control system **160** may be referred to as a controller.

The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the ID number, the angle of elevation, the azimuth angle, and a value representing the reception intensity of each of the satellites from which the satellite signals are received.

The GNSS unit **110** may perform positioning of the work vehicle **100** by utilizing an RTK (Real Time Kinematic)-GNSS. In the positioning based on the RTK-GNSS, not only satellite signals transmitted from a plurality of GNSS satellites, but also a correction signal that is transmitted from a reference station is used. The reference station may be disposed near the work area where the work vehicle **100** performs tasked travel (e.g., at a position within 10 km of the work vehicle **100).** The reference station generates a correction signal of, for example, an RTCM format based on the satellite signals received from the plurality of GNSS satellites, and transmits the correction signal to the GNSS unit **110.** The RTK receiver **112,** which includes an antenna and a modem, receives the correction signal transmitted from the reference station. Based on the correction signal, the processing circuit **116** of the GNSS unit **110** corrects the results of the positioning performed by the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The GNSS unit **110** calculates the position of the work vehicle **100** as frequently as, for example, one to ten times per second. Note that the positioning method is not limited to being performed by using an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System).

The GNSS unit **110** according to the present embodiment further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** For example, the IMU **115** outputs a signal as frequently as approximately several ten times to several thousand times per second. Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the GNSS unit **110.**

The cameras **120** are imagers that image the surrounding environment of the work vehicle **100.** Each camera **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image (e.g., motion picture) data. The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning or detection of obstacles. As shown in FIG. **1****,** the plurality of cameras **120** may be provided at different positions on the work vehicle **100,** or a single camera **120** may be provided. A visible camera(s) to generate visible images and an infrared camera(s) to generate infrared images may be separately provided. Both of a visible camera(s) and an infrared camera(s) may be provided as a camera(s) for generating images for monitoring purposes. The infrared camera(s) may also be used for detection of obstacles at nighttime.

An obstacle sensor **130** detects objects around the work vehicle **100.** The obstacle sensor **130** may include a laser scanner or an ultrasonic sonar, for example. When an object exists at a position closer to the obstacle sensor **130** than a predetermined distance, the obstacle sensor **130** outputs a signal indicating the presence of an obstacle. A plurality of obstacle sensors **130** may be provided at different positions of the work vehicle **100.** For example, a plurality of laser scanners and a plurality of ultrasonic sonars may be disposed at different positions of the work vehicle **100.** Providing a multitude of obstacle sensors **130** can reduce blind spots in monitoring obstacles around the work vehicle **100.**

The steering wheel sensor **152** measures the angle of rotation of the steering wheel of the work vehicle **100.** The steering angle sensor **154** measures the steering angle of the front wheels **104F,** which are the wheels responsible for steering. Measurement values by the steering wheel sensor **152** and the steering angle sensor **154** may be used for steering control by the controller **180.**

The wheel axis sensor **156** measures the rotational speed, i.e., the number of revolutions per unit time, of a wheel axis that is connected to the wheels **104.** The wheel axis sensor **156** may be a sensor including a magnetoresistive element (MR), a Hall generator, or an electromagnetic pickup, for example. The wheel axis sensor **156** outputs a numerical value indicating the number of revolutions per minute (unit: rpm) of the wheel axis, for example. The wheel axis sensor **156** is used to measure the speed of the work vehicle **100.** Measurement values from the wheel axis sensor **156** can be utilized for the speed control by the controller **180.**

The drive device **240** includes various types of devices required to cause the work vehicle **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The storage device **170** includes one or more storage media such as a flash memory or a magnetic disc. The storage device **170** stores various data that is generated by the GNSS unit **110,** the camera(s) **120,** the obstacle sensor(s) **130,** the LiDAR sensor(s) **140,** the sensors **150,** and the controller **180.** The data that is stored by the storage device **170** may include an environment map of the environment where the work vehicle **100** travels, an obstacle map that is consecutively generated during travel, and path data for self-driving. The storage device **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, and the ECU **184** for self-driving control.

The ECU **181** controls the prime mover **102,** the transmission **103,** and brakes included in the drive device **240,** thus controlling the speed of the work vehicle **100.**

The ECU **182** controls the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communicator **190** to the implement **300.**

Based on data output from the GNSS unit **110,** the camera(s) **120,** the obstacle sensor(s) **130,** the LiDAR sensor(s) **140,** and the sensors **150,** the ECU **184** performs computation and control for achieving self-driving. For example, the ECU **184** estimates the position of the work vehicle **100** based on the data output from at least one of the GNSS unit **110,** the camera(s) **120,** and the LiDAR sensor(s) **140.** In a situation where a sufficiently high reception intensity exists for the satellite signals from the GNSS satellites, the ECU **184** may determine the position of the work vehicle **100** based only on the data output from the GNSS unit **110.** On the other hand, in an environment where obstructions, such as trees, that may hinder reception of the satellite signals exist around the work vehicle **100,** e.g., an orchard, the ECU **184** estimates the position of the work vehicle **100** by using the data output from the LiDAR sensor (s) **140** or the camera(s) **120.** During self-driving, the ECU **184** performs computation necessary for the work vehicle **100** to travel along a target path, based on the estimated position of the work vehicle **100.** The ECU **184** sends the ECU **181** a command to change the speed, and sends the ECU **182** a command to change the steering angle. In response to the command to change the speed, the ECU **181** controls the prime mover **102,** the transmission **103,** or the brakes to change the speed of the work vehicle **100.** In response to the command to change the steering angle, the ECU **182** controls the steering device **106** to change the steering angle.

Through the actions of these ECUs, the controller **180** realizes self-traveling. During self-traveling, the controller **180** controls the drive device **240** based on the measured or estimated position of the work vehicle **100** and on the consecutively-generated target path. As a result, the controller **180** can cause the work vehicle **100** to travel along the target path.

The plurality of ECUs included in the controller **180** can communicate with one another in accordance with a vehicle bus standard such as, for example, a CAN (Controller Area Network) . Instead of a CAN, faster communication methods such as Automotive Ethernet (registered trademark) may be used. Although the ECUs **181** to **184** are illustrated as individual blocks in FIG. **2****,** the function of each of the ECU **181** to **184** may be implemented by a plurality of ECUs. Alternatively, an onboard computer that integrates the functions of at least some of the ECUs **181** to **184** may be provided. The controller **180** may include ECUs other than the ECUs **181** to **184,** and any number of ECUs may be provided in accordance with functionality. Each ECU includes a processing circuit including one or more processors and one or more memories. Such a memory(es) may have stored therein a computer program for causing the processor(s) to perform various operation described below.

The communicator **190** is a device including a circuit communicating with the implement **300** and the terminal device **400.** The communicator **190** includes circuitry to perform exchanges of signals complying with an ISOBUS standard such as ISOBUS-TIM, for example, between itself and the communicator **390** of the implement **300.** This allows the implement **300** to perform a desired operation, or allows information to be acquired from the implement **300.** The communicator **190** may further include an antenna and a communication circuit to exchange signals via the network **80** with the respective communicators of the terminal device **400.** The network **80** may include a 3G, 4G, 5G, or any other cellular mobile communications network and the Internet, for example. The communicator **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operational terminal **200** is a terminal for the user to perform a manipulation related to the travel of the work vehicle **100** and the operation of the implement **300,** and is also referred to as a virtual terminal (VT). The operational terminal **200** may include a display device such as a touch screen panel, and/or one or more buttons. The display device may be a display such as a liquid crystal display or an organic light-emitting diode (OLED) display, for example. By manipulating the operational terminal **200,** the user can perform various manipulations, such as, for example, switching ON/OFF the self-driving mode, and switching ON/OFF the implement **300.** At least a part of these manipulations may also be realized by manipulating the operation switches **210.** The operational terminal **200** may be configured so as to be detachable from the work vehicle **100.** A user who is at a remote place from the work vehicle **100** may manipulate the detached operational terminal **200** to control the operation of the work vehicle **100.**

The drive device **340** in the implement **300** shown in FIG. **2** performs operations necessary for the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the work vehicle **100** via the communicator **390,** the controller **380** causes the drive device **340** to perform various operations. Moreover, a signal that is in accordance with the state of the implement **300** can be transmitted from the communicator **390** to the work vehicle **100.**

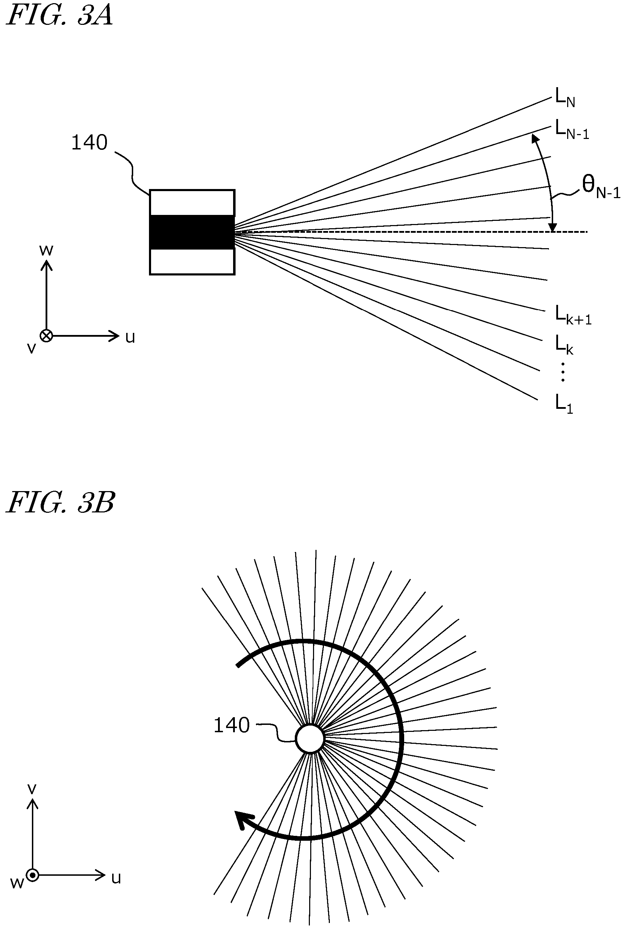

Next, with reference to FIG. **3A** and FIG. **3B****,** an exemplary configuration of the LiDAR sensor **140** will be described. The LiDAR sensor **140** in the present embodiment is a scan-type sensor capable of acquiring information on the distance distribution of objects within a space by laser beam scanning. FIG. **3A** is a schematic diagram of the LiDAR sensor **140** as viewed in a lateral direction of the work vehicle **100.** FIG. **3B** is a schematic diagram of the LiDAR sensor **140** as viewed from vertically above. In FIG. **3A** and FIG. **3B** are shown three axes u, v and w in a sensor coordinate system that is fixed to the LiDAR sensor **140,** which are orthogonal to one another. In FIG. **3A** and FIG. **3B****,** straight lines extending radially schematically represent the center axes (or traveling directions) of laser beams emitted from the LiDAR sensor **140.** Although each laser beam is collimated into parallel light, it has an angle of spread of several milliradians (e.g., 0.1 to 0.2 degrees). Therefore, the cross-sectional size (spot diameter) of each laser beam increases in proportion to distance from the LiDAR sensor **140.** For example, a light spot with a diameter of several centimeters may be formed 20 meters away from the LiDAR sensor **140.** In the figure, for simplicity, the spread of each laser beam is ignored, and only the center axis of the laser beam is illustrated.

The LiDAR sensor **140** in the example of FIG. **3A** is able to emit laser beams from a plurality of laser light sources that are arranged along the vertical direction, respectively at different angles of elevation. An angle of elevation is defined as an angle relative to the uv plane. In this example, the uv plane is essentially parallel to the horizontal plane. Note that, when the ground surface is inclined with respect to the horizontal plane, the uv plane and the horizontal plane will intersect. FIG. **3A** illustrates N laser beams L₁,..., L_{N} being emitted. Herein, "N" is an integer of 1 or greater, and may be e.g. 10 or greater, and 64, or even 100 or greater, for high-performance models. Among the plurality of laser beams, a k^{th} laser beam from the bottom has an angle of elevation θₖ. As one example, FIG. **3A** shows an angle of elevation **θ_{N-1}** of an N-1^{th} laser beam. The angle of elevation of any laser beam going upward from the uv plane is defined as a "positive angle of elevation", whereas the angle of elevation of any laser beam going downward from the uv plane is defined as a "negative angle of elevation".

A LiDAR sensor having an N of 1 may be referred to as a "two-dimensional LiDAR", while a LiDAR sensor having an N of 2 or more may be referred to as a "three-dimensional LiDAR". When N is 2 or more, the angle made by the first laser beam and an N^{th} laser beam is referred to as the "vertical viewing angle". The vertical viewing angle may be set in a range from about 20° to 60°, for example.

As shown in FIG. **3B****,** the LiDAR sensor **140** is able to change the outgoing directions (e.g., azimuth angles) of laser beams. FIG. **3B** shows the outgoing directions of the plurality of laser beams shown in FIG. **3A** as rotating around a rotation axis that is parallel to the w axis. The range of the outgoing directions (azimuth angles) of the laser beams may be 360°, or an angle range that is smaller than 360° (e.g., 210° or 270°). The range of azimuth angles of the outgoing directions of laser beams is referred to as the "horizontal viewing angle". The horizontal viewing angle may be set in a range from about 90° to 360°, for example. While rotating the outgoing directions of laser beams around a rotation axis that is parallel to the w axis, the LiDAR sensor **140** sequentially emits pulsed laser light (laser pulses) in directions of different azimuth angles. Thus, with pulsed laser light emitted at different angles of elevation and different azimuth angles, it is possible to measure the distance to each reflection point. Each reflection point corresponds to each individual point contained in the point cloud data. The operation of measuring the distance to each reflection point while the azimuth angles of laser beams make one rotation around the rotation axis is referred to as one scan. Sensor data that is obtained through one scan contains data that is measured for every layer that is associated with a certain angle of elevation as shown in FIG. **3A****.** Therefore, the greater the number of layers is, the greater the number of points in the point cloud that are obtained through one scan for the same environment. The LiDAR sensor **140** repeats scan operations with a frequency of about 1 to 20 times per second, for example. During one scan operation, 100,000 or more pulses of laser light may be emitted in different directions, for example.

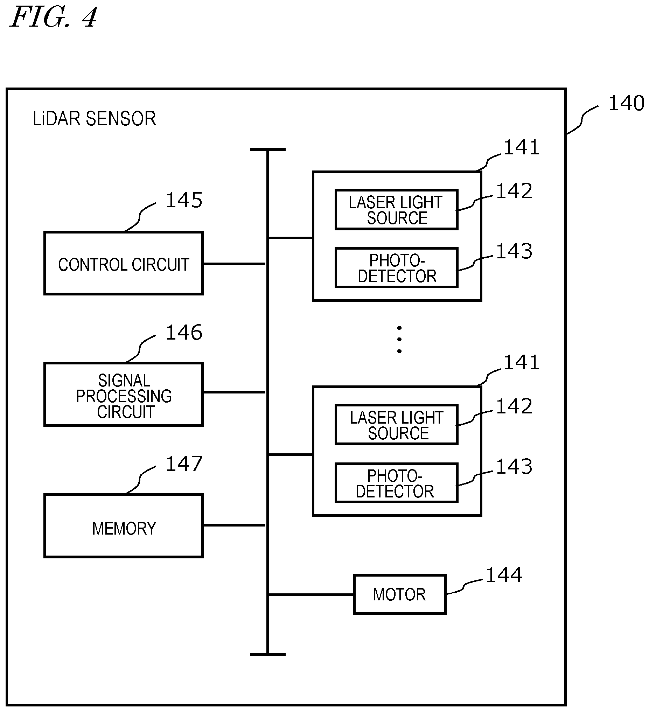

FIG. **4** is a block diagram showing an exemplary schematic configuration of the LiDAR sensor **140.** As shown in FIG. **4****,** the LiDAR sensor **140** includes a plurality of laser units **141,** an electric motor **144,** a control circuit **145,** a signal processing circuit **146,** and a memory **147.** Each laser unit **141** includes a laser light source **142** and a photodetector **143.** Each laser unit **141** may include optics such as a lens(es) and a mirror(s), but they are omitted from illustration. By rotating a mirror that is placed on the optical path of a laser beam emitted from each laser light source **142,** for example, the motor **144** changes the direction of the laser beam emitted from the respective laser light source **142.**

Each laser light source **142** includes a laser diode, and emits a pulsed laser beam of a predetermined wavelength in response to a command from the control circuit **145.** The wavelength of the laser beam may be a wavelength that is contained in the near-infrared wavelength region (approximately 700 nm to 2.5 µm), for example. The wavelength used depends on the material of the photoelectric conversion element used for the photodetector **143.** In the case where silicon (Si) is used as the material of the photoelectric conversion element, for example, a wavelength around 900 nm may be mainly used. In the case where indium gallium arsenide (InGaAs) is used as the material of the photoelectric conversion element, a wavelength of not less than 1000 nm and not more than 1650 nm may be used, for example. Note that the wavelength of the laser beam is not limited to the near-infrared wavelength region. In applications where influences of ambient light are not a problem (e.g., for nighttime use), a wavelength contained in the visible region (approximately 400 nm to 700 nm) may be used. Depending on the application, the ultraviolet wavelength region may also be used. In the present specification, any radiation in the ultraviolet, visible light, and infrared wavelength regions in general is referred to as "light".

Each photodetector **143** is a device to detect laser pulses that are emitted from the laser light source **142** and reflected or scattered by an object. The photodetector **143** includes a photoelectric conversion element such as an avalanche photodiode (APD), for example. The photodetector **143** outputs an electrical signal which is in accordance with the amount of received light.

In response to a command from the control circuit **145,** the motor **144** rotates the mirror that is placed on the optical path of a laser beam emitted from each laser light source **142.** This realizes a scan operation that changes the outgoing directions of laser beams.

The control circuit **145** controls emission of laser pulses by the laser light sources **142,** detection of reflection pulses by the photodetectors **143,** and rotational operation by the motor **144.** The control circuit **145** can be implemented by a circuit that includes a processor and a memory, e.g., a microcontroller unit (MCU), for example.

The signal processing circuit **146** is a circuit to perform computations based on signals that are output from the photodetectors **143.** The signal processing circuit **146** uses a ToF (Time of Flight) technique to calculate a distance to an object that has reflected a laser pulse emitted from a laser light source **142,** for example. ToF techniques include direct ToF and indirect ToF. Under direct ToF, the time from the emission of a laser pulse from the laser light source **142** until reflected light is received by the photodetector **143** is directly measured to calculate the distance to the reflection point. Under indirect ToF, a plurality of exposure periods are set in the photodetector **143,** and the distance to each reflection point is calculated based on a ratio of light amounts detected in the respective exposure periods. Either the direct ToF or indirect ToF method may be used. The signal processing circuit **146** generates and outputs sensor data indicating the distance to each reflection point and the direction of that reflection point, for example. Furthermore, the signal processing circuit **146** may calculate coordinates (u,v) or (u,v,w) in the sensor coordinate system based on the distance to each reflection point and the direction of that reflection point, and include these in the sensor data for output.

Although the control circuit **145** and the signal processing circuit **146** are two separate circuits in the example of FIG. **4****,** they may be implemented as a single circuit.

The memory **147** is a storage medium to store data that is generated by the control circuit **145** and the signal processing circuit **146.** For example, the memory **147** stores data that associates the emission timing of a laser pulse emitted from each laser unit **141,** the outgoing direction, the reflected light intensity, the distance to the reflection point, and the coordinates (u,v) or (u,v,w) in the sensor coordinate system. Such data is generated each time a laser pulse is emitted, and recorded to the memory **147.** The control circuit **145** outputs such data with a predetermined cycle (e.g., the length of time required to emit a predetermined number of pulses, a half scan period, or one scan period). The output data is recorded in the storage device **170** of the work vehicle **100.**

The LiDAR sensor **140** outputs sensor data with a frequency of about 1 to 20 times per second, for example. This sensor data may contain the coordinates of multiple points expressed by the sensor coordinate system, and time stamp information. The sensor data may contain the information of distance and direction toward each reflection point but not contain coordinate information. In such cases, the controller **180** performs conversion from the distance and direction information into coordinate information.

Note that the method of distance measurement is not limited to the ToF technique, but other methods such as the FMCW (Frequency Modulated Continuous Wave) technique may also be used. In the FMCW technique, light whose frequency is linearly changed is emitted, and distance is calculated based on the frequency of beats that occur due to interferences between the emitted light and the reflected light.

As described above, the LiDAR sensor(s) **140** according to the present embodiment may be scan-type sensors, which acquire information on the distance distribution of objects in space by scanning a laser beam. However, the LiDAR sensors **140** are not limited to scan-type sensors. For example, the LiDAR sensor(s) **140** may be flash-type sensors, which acquire information on the distance distribution of objects in space by using light diffused over a wide area. A scan-type LiDAR sensor uses a higher intensity light than does a flash-type LiDAR sensor, and thus can acquire distance information at a greater distance. On the other hand, flash-type LiDAR sensors are suitable for applications that do not require intense light because they are simple in structure and can be manufactured at low cost.

### [2. operation]

Next, an operation of the work vehicle **100** will be described.

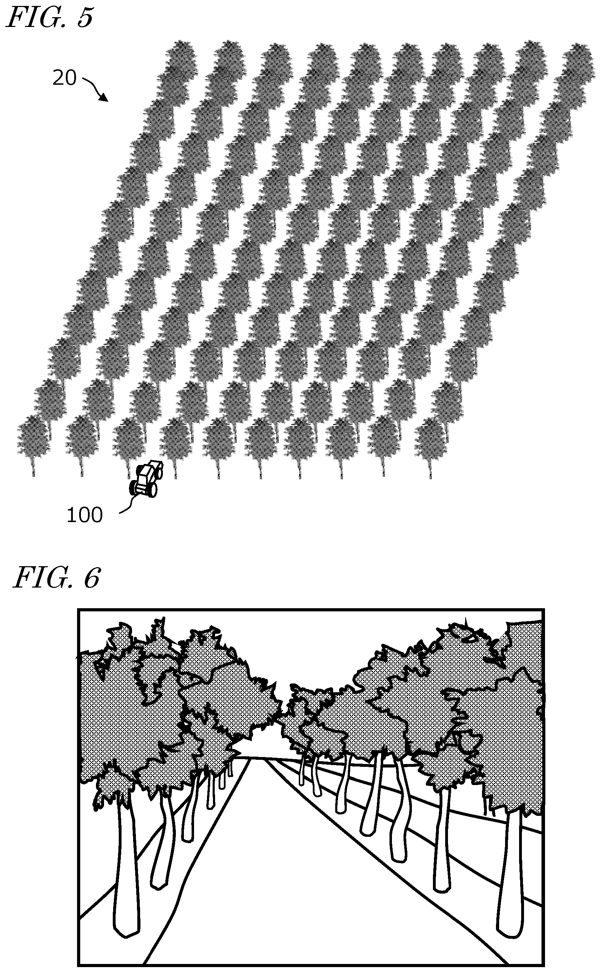

FIG. **5** is a diagram schematically showing an example of an environment in which the work vehicle **100** travels. FIG. **6** is a perspective view schematically showing an example of the surrounding environment of the work vehicle **100.** In this example, while traveling between rows of trees **20** (i.e., crop rows) in an orchard such as a vineyard, the work vehicle **100** uses the implement **300** to perform predetermined tasks (e.g., spreading chemical agents, mowing, preventive pest control, or the like). The sky over an orchard is obstructed by branches and leaves, which may hinder self-traveling using a GNSS. In an environment where a GNSS cannot be used, it may be conceivable to travel while performing localization through matching between an environment map that is created in advance and the sensor data. However, in a field such as an orchard, the outer shapes of the leaves of trees or other crops or hedges may change significantly with seasons, thus making it difficult to continue using an environment map that is created in advance. Moreover, in a conventional self-driving agricultural machine, information such as positions of crop rows, shape of the field, and positions of headland areas is set in advance, and a path for self-traveling is generated based on such information. In a vast field, however, it is considerable work to set the positions of crop rows in advance.

Therefore, the controller **180** according to the present embodiment detects two crop rows existing on opposite sides of the work vehicle **100** based on sensor data that is output from the LiDAR sensor(s) **140,** and causes the work vehicle **100** to travel along a path between the two crop rows.

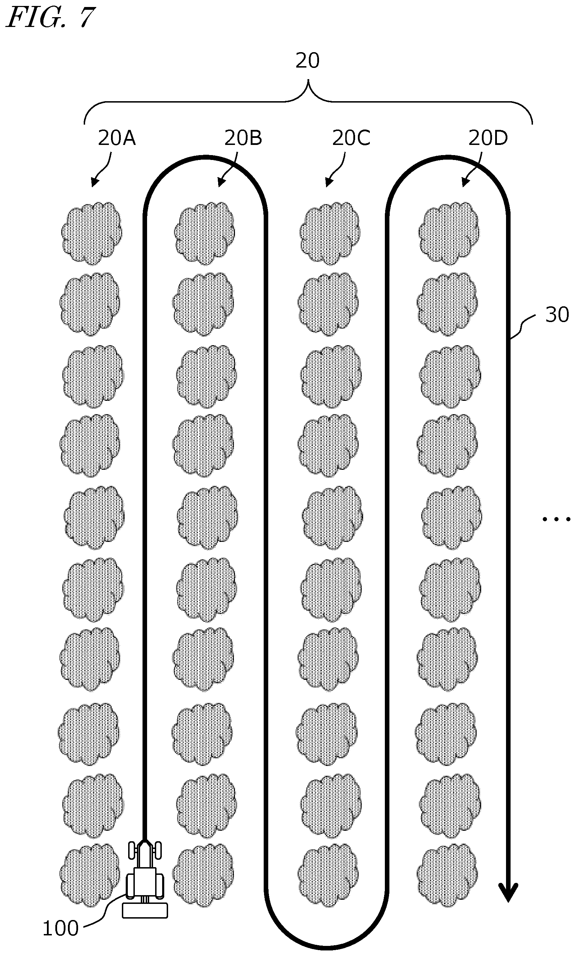

FIG. **7** is a diagram showing schematically an example of a travel path **30** of the work vehicle **100.** The work vehicle **100** travels among rows of trees **20** along the path **30** as illustrated. Although FIG. **7** illustrates any line segment included in the path **30** to be a straight line, the path along which the work vehicle **100** actually travels may include meandering portions. Now, the plurality of rows of trees **20** are sequentially designated as a first row of trees **20A,** a second row of trees **20B,** a third row of trees **20C,** a fourth row of trees **20D,...,** from the end. In the example of FIG. **7****,** the work vehicle **100** first travels between the first row of trees **20A** and the second row of trees **20B,** and upon completing this travel, turns right to travel between the second row of trees **20B** and the third row of trees **20C** in the opposite direction. Once the travel between the second row of trees **20B** and the third row of trees **20C** is completed, it further turns left to travel between the third row of trees **20C** and the fourth row of trees **20D.** Thereafter, by repeating a similar operation, it travels to the final end of the path **30,** which will be in between the last two rows of trees.

At timings when the GNSS unit **110** is able to receive a GNSS signal, positioning may be conducted based on the GNSS signal. For example, at any timing of turning around along the path **30** illustrated in either FIG. **7****,** no leaves exist to obstruct the GNSS signal, and therefore positioning based on the GNSS signal is possible.

The controller **180** of the work vehicle **100** according to the present embodiment operates in an inter-row travel mode of causing the work vehicle **100** to travel along a path between two adjacent rows of trees, and a turning travel mode of causing the work vehicle **100** to turn in a headland. A headland is a region between an end of each row of trees and the boundary of the orchard. In the inter-row travel mode, based on the sensor data being consecutively output from the LiDAR sensor (s) **140,** the controller **180** detects two rows of trees existing on opposite sides of the work vehicle **100,** and while setting a target path in between the two rows of trees, causes the work vehicle **100** to travel along the target path. During turning, based on the sensor data being consecutively output from the LiDAR sensor(s) **140,** the controller **180** causes the work vehicle **100** to travel along the turning path, while performing localization for the work vehicle **100.** In the turning travel mode, the controller **180** may utilize not only the sensor data but also utilize a signal that is output from the GNSS receiver **111** and/or a signal that is output from the IMU **115** to perform positioning. Once completing the turn, the work vehicle **100** again transitions to the inter-row travel mode. Thereafter, similar operations are repeated until the last instance of inter-row travel is finished. Through the above operation, self-traveling between rows of trees **20** is achieved. The above control is mainly realized by the ECU **184** of the controller **180** (FIG. **2**)**.**

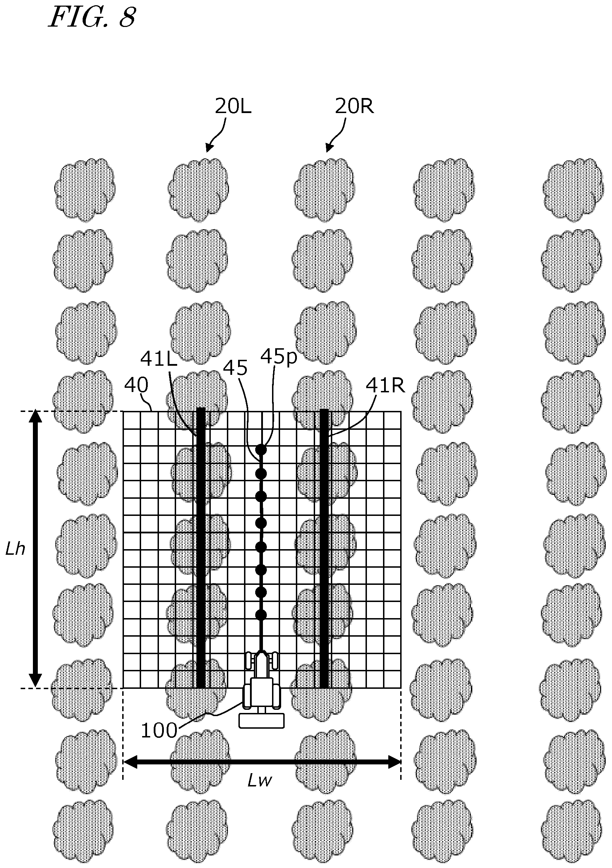

FIG. **8** is a diagram for describing a method of travel control for the work vehicle **100** in the inter-row travel mode. While traveling between two adjacent rows of trees **20R** and **20L,** the work vehicle **100** scans the surrounding environment with a laser beam, by using the LiDAR sensor(s) **140.** As a result, data indicating a distance distribution of objects existing in the environment is acquired. The data indicating the distance distribution is converted into two-dimensional or three-dimensional point cloud data, for example, and output as sensor data. During travel of the work vehicle **100,** the controller **180** consecutively generates the obstacle map **40** based on the sensor data that is output from the LiDAR sensor(s) **140.** The obstacle map **40** represents a distribution of objects in a vehicle coordinate system that is fixed to the work vehicle **100.** The vehicle coordinate system is a coordinate system that moves together with the work vehicle **100,** and is also referred to as a sensor coordinate system or a local coordinate system.

The obstacle map **40** has a predetermined length **Lh** and width **Lw.** The length **Lh** is a longitudinal size corresponding to the traveling direction of the work vehicle **100.** The width **Lw** is a lateral size that is perpendicular to both of the traveling direction of the work vehicle **100** and the vertical direction.

In the example shown in FIG. **8****,** the controller **180** detects two rows of trees **20R** and **20L** existing on opposite sides of the work vehicle **100,** based on the obstacle map **40.** Specifically, the controller **180** subjects the obstacle map **40** to a Hough transform or other processing to derive approximate straight lines (line segments) **41R** and **41L** for the rows of trees **20R** and **20L.** The controller **180** sets a target path **45** between the approximate straight lines **41R** and **41L** (e.g., in the middle). In a case where the plurality of trees in the rows of trees **20R** and **20L** are distributed in curved shapes, the controller **180** may derive approximate curves rather than approximate straight lines, and set the target path **45** between such approximate curves. The target path **45** may be set in a relatively short range beginning at the position of the work vehicle **100** (e.g., a range on the order of 5 to 30 meters).

The target path **45** may be defined by a plurality of waypoints **45p.** Each waypoint **45p** may contain information of the position and orientation (or velocity) of the point to be passed by the work vehicle **100.** The interval between waypoints **45p** may be set to a value of e.g. several ten centimeters (cm) to several meters (m).

The controller **180** causes the work vehicle **100** to travel along the target path **45** that has been set. For example, the controller **180** performs steering control for the work vehicle **100** so as to minimize the deviation of the position and orientation of the work vehicle **100** with respect to the target path **45.** As a result, the work vehicle **100** can be made to travel along the target path **45.**

The obstacle map **40** shown in FIG. **8** is an occupancy grid map having a plurality of grid cells that are arranged in a two-dimensional array. Although FIG. **8** illustrate 16×16=256 grid cells, the number of grid cells may be arbitrary. Without being limited to the illustrated example, the obstacle map **40** may be a map (e.g., a voxel map) indicating a three-dimensional distribution of geographic features existing around the work vehicle **100,** for example. Alternatively, the obstacle map **40** may be a map data of other formats, e.g., a point cloud map.

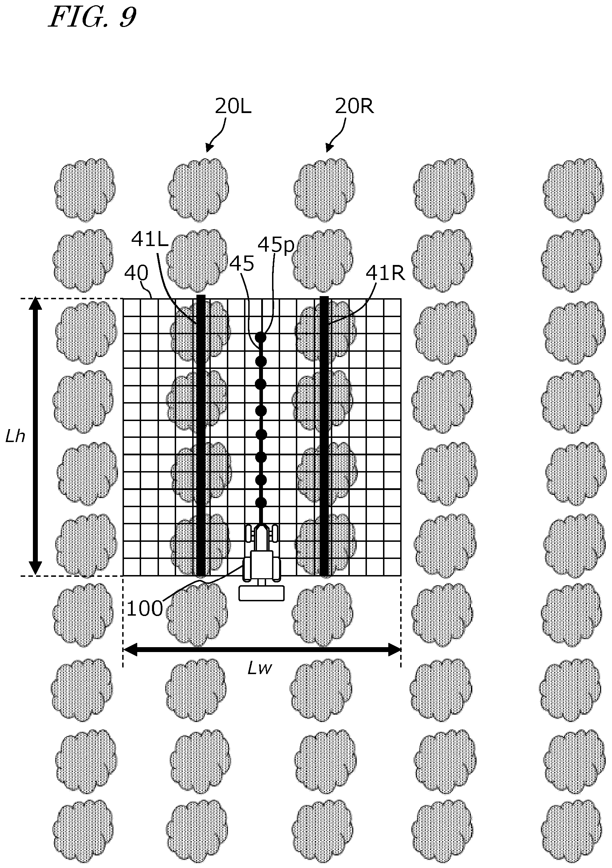

The obstacle map **40** moves together with the work vehicle **100.** FIG. **9** is a diagram showing an obstacle map **40** that moves together with the work vehicle **100.** The work vehicle **100** shown in FIG. **9** has moved forward from the work vehicle **100** shown in FIG. **8****,** so that the obstacle map **40** has also moved forward.

The controller **180** may generate the obstacle map **40** by eliminating data of any points that are estimated as corresponding to unwanted objects, e.g., the ground surface and weeds, from the sensor data that is output from the LiDAR sensor(s) **140.** In a case where three-dimensional point cloud data is output as the sensor data, from the point cloud data, the controller **180** may extract only the data of points whose height from the ground surface is within a predetermined range (e.g., within a range of 0.1 m to 1.5 m), and generate the obstacle map from the extracted data of points. By such a method, an obstacle map indicating a distribution of trees (mainly the trunks) can be generated.

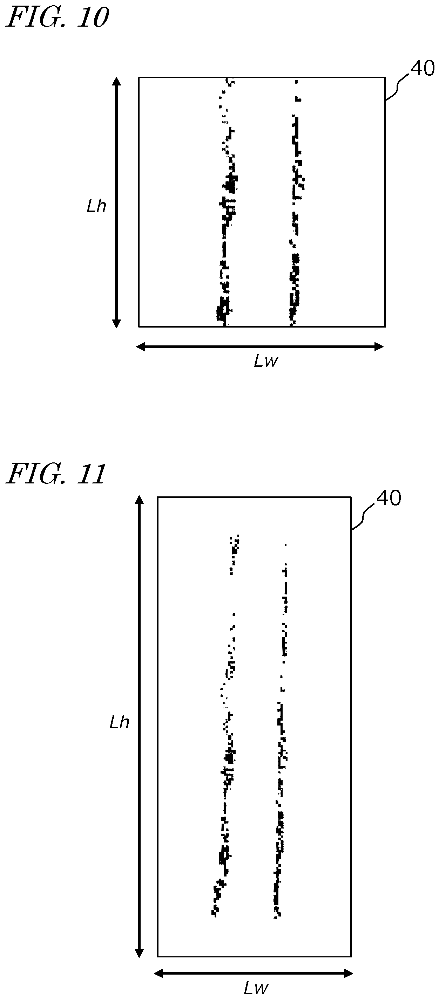

FIG. **10** is a diagram showing an example of the obstacle map **40** being generated based on sensor data. In the obstacle map **40** shown in FIG. **10****,** grid cells in which objects exist are depicted as dark, while grid cells in which no objects exist are depicted as blank. The dark grid cells indicate the presence of objects such as tree trunks or leaves. The obstacle map **40** may be expressed by data in which numerical value "1" is assigned to any grid cell in which an object exists and numerical value "0" is assigned to any grid cell in which no object exists, for example. The controller **180** may be configured so as to consecutively generate the obstacle map **40** as shown in FIG. **10** based on sensor data that is acquired by the LiDAR sensor(s) **140** through one cycle of scanning. For each cycle of scanning, the obstacle map **40** may be updated. The obstacle map **40** may contain not only two-dimensional positional information as illustrated, but also information of height from the ground surface or the horizontal plane. The controller **180** may extract only the points whose height is within a predetermined range to generate the obstacle map **40** indicating the distribution of rows of trees. The controller **180** may merge the sensor data that is output from a plurality of LiDAR sensors **140** to generate one obstacle map **40.** For example, the sensor data that is output from two LiDAR sensors **140** (FIG. **1****)** that are disposed in the front and the rear of the work vehicle **100** may be merged to generate one obstacle map **40.** Alternatively, sensor data equivalent to a plurality of cycles may be merged to generate one obstacle map. In the example of FIG. **10****,** the length **Lh** and the width **Lw** of the obstacle map **40** are equal; however, the length **Lh** and the width **Lw** may be different. For instance, as in the example shown in FIG. **11****,** the length **Lh** of the obstacle map **40** may be longer than its width **Lw.**

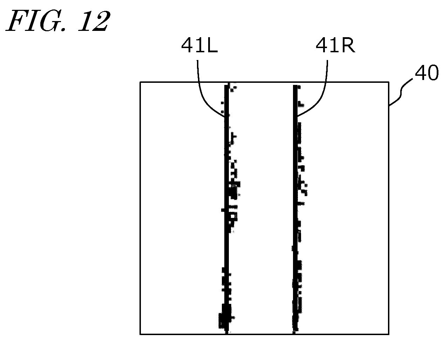

Based on the obstacle map **40,** the controller **180** detects two rows of trees **20R** and **20L** existing on opposite sides of the work vehicle **100.** For example, as shown in FIG. **12****,** the controller **180** can detect two rows of trees **20R** and **20L** by determining two approximate straight lines **41R** and **41L** (or approximate curves) from a plurality of rows of points that are distributed along the traveling direction of the work vehicle **100.**

Next, control of the steering angle of the wheels responsible for steering **104F** will be described.

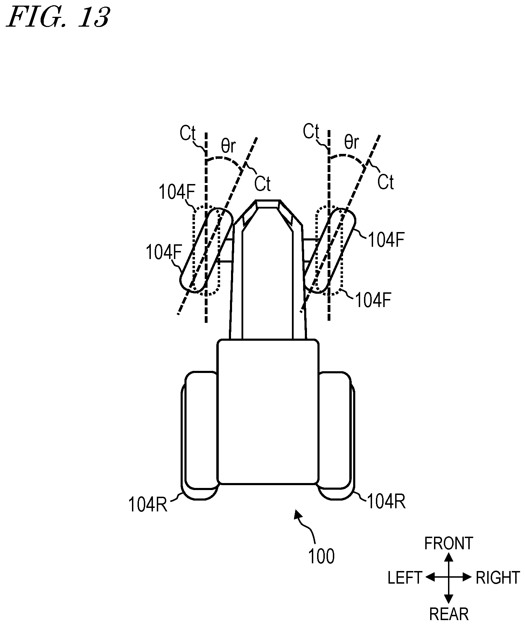

FIG. **13** is a diagram describing a steering angle **θᵣ** of the front wheels **104F,** which are wheels responsible for steering. The reference symbols **Ct** in FIG. **13** indicate tire center lines of the wheels responsible for steering **104F.** The steering angle **θᵣ** is, in a plan view of the work vehicle **100,** an angle of the tire center line **Ct** of each wheel responsible for steering **104F** with respect to the direction (0 degrees) of the tire center line **Ct** of the wheel responsible for steering **104F** when the work vehicle **100** is in a state of traveling straight on a flat path that is horizontal. FIG. **13** illustrates a steering angle **θᵣ** in a case where the work vehicle **100** turns right, as an example.

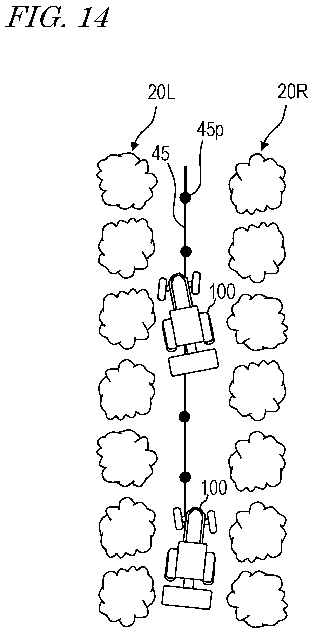

FIG. **14** is a diagram showing an operation of causing the work vehicle **100** to follow the target path **45.** During self-driving of the work vehicle **100,** the ECU **184** (FIG. 2) performs a control of causing the work vehicle **100** to follow the target path **45.** Causing the work vehicle **100** to follow the target path **45** includes causing the work vehicle **100** to head toward a next waypoint **45p.** If the work vehicle **100** is deviated to the right from the target path **45,** the ECU **184** may perform a control of changing the steering angle **θᵣ** of the wheels responsible for steering **104F** in the direction of turning left. If the work vehicle **100** is deviated to the left from the target path **45,** the ECU **184** may perform a control of changing the steering angle **θᵣ** of the wheels responsible for steering **104F** in the direction of turning right. The ECU **184** sends a command to change the steering angle to the ECU **182.** By controlling the steering device **106** in response to the command to change the steering angle, the ECU **182** changes the steering angle **θᵣ** of the wheels responsible for steering **104F.**

When the work vehicle **100** performs self-traveling between crop rows **20,** it is desirable to control the steering angle **θᵣ** so that the work vehicle **100** is restrained from coming into unwanted contact with the crop rows **20.**

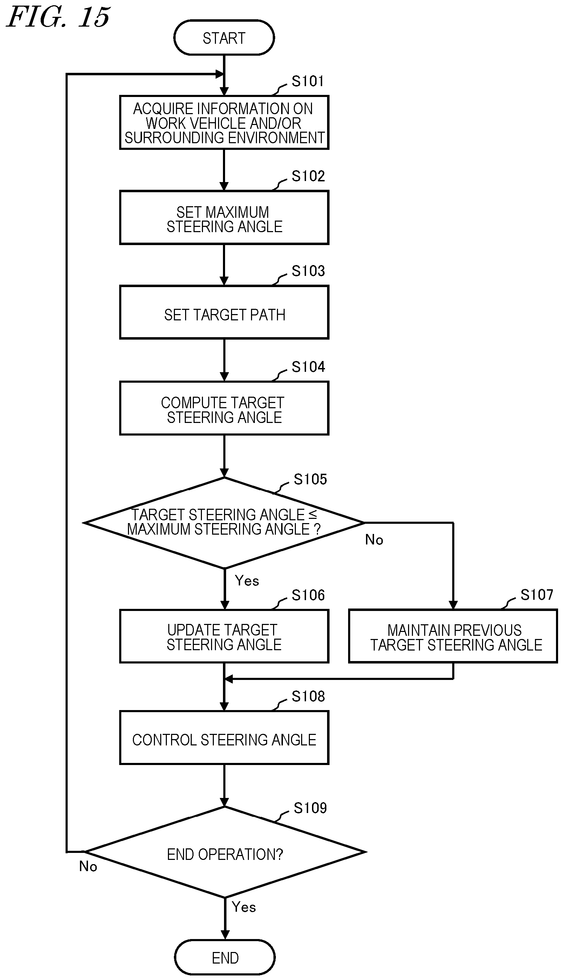

FIG. **15** is a flowchart showing an example of a process of controlling the steering angle **θᵣ** of the wheels responsible for steering **104F.**

First, the ECU **184** acquires information on at least one of the work vehicle **100** and the surrounding environment of the work vehicle **100** (step **S101).** Based on the information on at least one of the work vehicle **100** and the surrounding environment of the work vehicle **100,** the ECU **184** sets a maximum steering angle θₘₐₓ for the wheels responsible for steering **104F** (step **S102).** The maximum steering angle θₘₐₓ is a maximum value that can be taken by the steering angle **θᵣ** in the control of the steering angle **θᵣ** of the wheels responsible for steering **104F,** and is changeable depending on the condition.

For example, the ECU **184** acquires the value of traveling speed of the work vehicle **100,** and sets the maximum steering angle θₘₐₓ based on the value of traveling speed. For example, the ECU **184** can compute the traveling speed of the work vehicle **100** based on an output signal from the wheel axis sensor **156** (FIG. **2****)** and/or the IMU **115.**

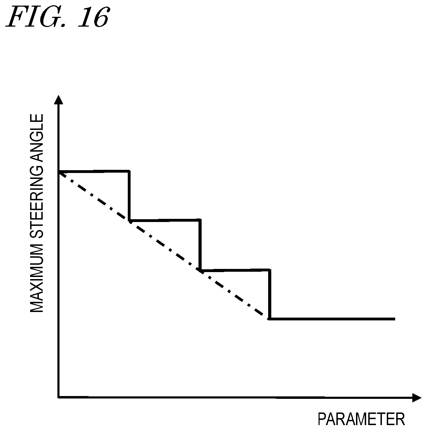

FIG. **16** is a diagram showing an example of a method of setting the maximum steering angle θₘₐₓ. In FIG. **16****,** the vertical axis represents the maximum steering angle θₘₐₓ, and the horizontal axis represents a parameter. The parameter is a parameter concerning the surrounding environment of the work vehicle **100** and/or the work vehicle **100.** Herein, the parameter is the traveling speed of the work vehicle **100.**

The ECU **184** changes the maximum steering angle θₘₐₓ in accordance with the traveling speed of the work vehicle **100.** For example, the ECU **184** decreases the maximum steering angle θₘₐₓ when the traveling speed is larger than when it is smaller. For example, as shown by solid lines in FIG. **16****,** the maximum steering angle θₘₐₓ may be decreased in a discrete manner as the traveling speed increases. Alternatively, as shown by a dot-dash line in FIG. **16****,** the maximum steering angle θₘₐₓ may be decreased in a continuous manner as the traveling speed increases. Thus, by decreasing the maximum steering angle θₘₐₓ when the traveling speed is large, driving stability can be improved.

The ECU **184** sets the target path **45** for the work vehicle **100** between two rows of trees **20** (step **S103).** Setting of the target path **45** includes setting of waypoints **45p.** As described above, based on sensor data that is output from the LiDAR sensor(s) **140** or the like, the ECU **184** detects two rows of trees **20** existing on both right and left sides of the work vehicle **100,** and sets the target path **45** in between the two detected rows of trees **20.**

The ECU **184** computes a target steering angle θₙ for the wheels responsible for steering **104F** that is aimed at causing the work vehicle **100** to follow the target path **45** (step **S104).** For example, the ECU **184** computes a steering angle that is needed for the work vehicle **100** to pass through a next waypoint **45p** that is located forward of the work vehicle **100,** and this steering angle is deemed as the target steering angle θₙ.

The ECU **184** determines which one of the target steering angle θₙ having been computed at step **S104** and the maximum steering angle θₘₐₓ having been set step **S102** is greater (step **S105).** The determination as to which one of the target steering angle θₙ and the maximum steering angle θₘₐₓ is greater can be made by finding a greater one of the absolute value of the target steering angle θₙ and the absolute value of the maximum steering angle θₘₐₓ.

If the computed target steering angle θₙ is equal to or smaller than the maximum steering angle θₘₐₓ, the ECU **184** updates the value of the target steering angle θₙ to be used for controlling the steering device **106** from the value of the previously-adopted target steering angle θₙ₋₁ to the value of the currently computed target steering angle θₙ (step **S106).**

When the computed target steering angle θₙ is greater than the maximum steering angle θₘₐₓ, the ECU **184** maintains the value of the previously-adopted target steering angle θₙ₋₁ as a value of the target steering angle θₙ to be used for controlling the steering device **106** (step **S107).**

The ECU **184** sends a command value to the ECU **182** so that the steering angle **θᵣ** of the wheels responsible for steering **104F** equals the target steering angle θₙ determined through the processes of steps **S105 to S107.** By controlling the steering device **106** in accordance with the command value, the ECU **182** changes the steering angle **θᵣ** of the wheels responsible for steering **104F.** As a result, the steering angle **θᵣ** of the wheels responsible for steering **104F** can be controlled so that it equals the target steering angle θₙ (step **S108).**

The ECU **184** returns to the process of step **S101,** and repeats the processes from step **S101 to S108.** When ending the aforementioned control for the steering angle **θᵣ**, e.g., when finishing work between rows of trees **20,** the process shown in FIG. **15** is ended (step **S109).**

As described above, when the computed target steering angle θₙ is greater than the maximum steering angle θₘₐₓ, the value of the previous target steering angle θₙ₋₁ is maintained, whereby the steering angle of the wheels responsible for steering **104F** can be controlled so as to be equal to or smaller than the maximum steering angle θₘₐₓ.

In an implementation where a maximum steering angle θₘₐₓ that is once set is never changed thereafter, the ECU **184** may return to the process of step **S103** after the process of step **S108.** After determining the maximum steering angle θₘₐₓ at the start of travel, the maximum steering angle θₘₐₓ may be fixed to that value and not changed, or it may be changed during travel.

In a case where the target path **45** is not updated as frequently as the steering angle **θᵣ** is changed, the ECU **184** may return to the process of step **S104** after the process of step **S108.** After repeating the processes from step **S104** to step **S108** several times, control may return to the process of any of steps **S101** to **S103.**

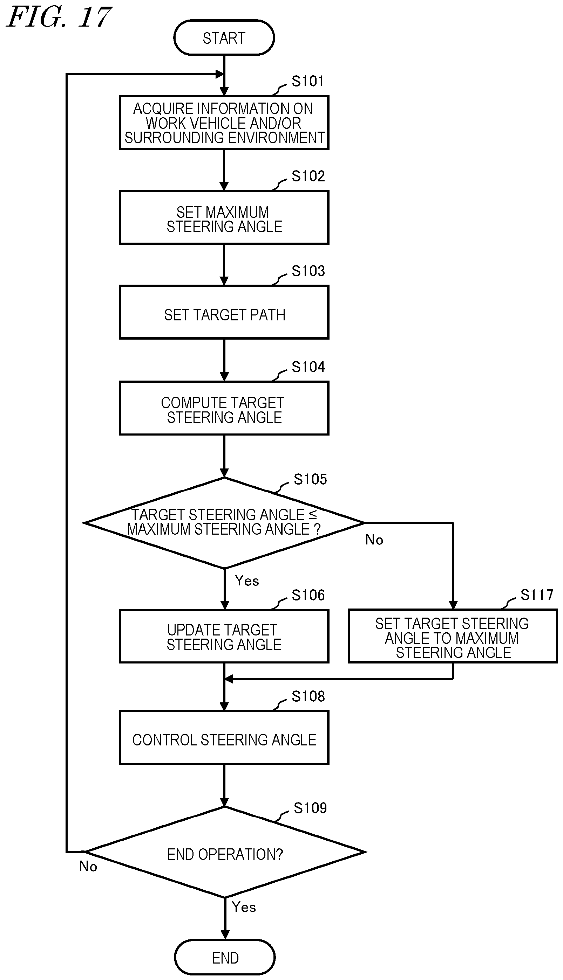

FIG. **17** is a flowchart showing another example of a process of controlling the steering angle **θᵣ** of the wheels responsible for steering **104F.** In the process shown in FIG. **17****,** when the computed target steering angle θₙ is greater than the maximum steering angle θₘₐₓ, the ECU **184** sets the value of the maximum steering angle θₘₐₓ as a value of the target steering angle θₙ to be used for controlling the steering device **106** (step **S117).** The ECU **184** performs control so that the steering angle **θᵣ** of the wheels responsible for steering **104F** equals the target steering angle θₙ as determined through the processes of steps **S105, S106** and **S117** (step **S108).** The other processes are similar to the processes shown in FIG. **15****.** Thus, when the computed target steering angle θₙ is greater than the maximum steering angle θₘₐₓ, adopting the maximum steering angle θₘₐₓ, i.e., the largest adoptable value, makes it easier for the work vehicle **100** to follow the target path **45.**

According to the present embodiment, based on a state of at least one of the work vehicle **100** and the surrounding environment of the work vehicle **100,** a maximum steering angle θₘₐₓ for the wheels responsible for steering **104F** is set, and the steering angle **θᵣ** of the wheels responsible for steering **104F** is controlled so as to be equal to or smaller than the maximum steering angle θₘₐₓ. By setting the maximum steering angle θₘₐₓ based on a state of at least one of the work vehicle **100** and the surrounding environment, the work vehicle **100** can be restrained from coming into contact with the rows of trees **20.** By controlling the steering angle **θᵣ** of the wheels responsible for steering **104F** so as to be equal to or smaller than the maximum steering angle θₘₐₓ, the work vehicle **100** can be restrained from coming into contact with the rows of trees **20,** and driving stability can be improved.

At step **S107** shown in FIG. **15****,** if the value of the previous target steering angle ₙ₋₁ to be maintained is greater than the latest maximum steering angle θₘₐₓ, the steering angle **θᵣ** of the wheels responsible for steering **104F** may be controlled so as to be equal to or smaller than the latest maximum steering angle θₘₐₓ.

Moreover, for example, when the wheels responsible for steering **104F** are to be steered right in order to follow the target path **45,** the previous target steering angle to be maintained at step **S107** may have been an angle of steering left; in that case, the steering angle θᵣ of the wheels responsible for steering **104F** may be controlled to be an angle of steering right.

The ECU **184** performs control so that the steering angle θᵣ of the wheels responsible for steering **104F** equals the processes of steps **S105, S106, S107** and **S117** target steering angle θₙ. When determining that the work vehicle **100** cannot be made to follow the target path **45** through such control of the steering angle θᵣ, the ECU **184** may perform a control of halting the work vehicle **100.** For example, when determining that following the target path **45** will result in a collision with some object in the surroundings (a tree, etc.), a control of halting the work vehicle **100** may be performed.

When determining that the work vehicle **100** cannot be made to follow the target path **45,** the ECU **184** may perform a control of making the traveling speed of the work vehicle **100** smaller than the current traveling speed. The ECU **184** changes the maximum steering angle θₘₐₓ based on the reduced traveling speed, and determines the target steering angle θₙ based on the changed maximum steering angle θₘₐₓ. By reducing the traveling speed, the maximum steering angle θₘₐₓ can be increased. By increasing the maximum steering angle θₘₐₓ, the target steering angle θₙ can be increased, thereby making it easier for the work vehicle **100** to follow the target path **45.**

In the above description, the maximum steering angle θₘₐₓ is set based on the traveling speed of the work vehicle **100;** alternatively, the maximum steering angle θₘₐₓ may be set based on another parameter. For example, the ECU **184** may set the maximum steering angle θₘₐₓ based on at least one of the following parameters.
· traveling speed of the work vehicle **100**
· size of the implement **300**
· wheelbase of the work vehicle **100**
· curvature of the rows of trees **20**
· size of width between two rows of trees **20**
· the difference between the width between two rows of trees **20** and the width of the work vehicle **100**
· angle of dip of the ground surface
As a result, a maximum steering angle θₘₐₓ that is suitable for the surrounding environment of the work vehicle **100** and/or the work vehicle **100** can be set.

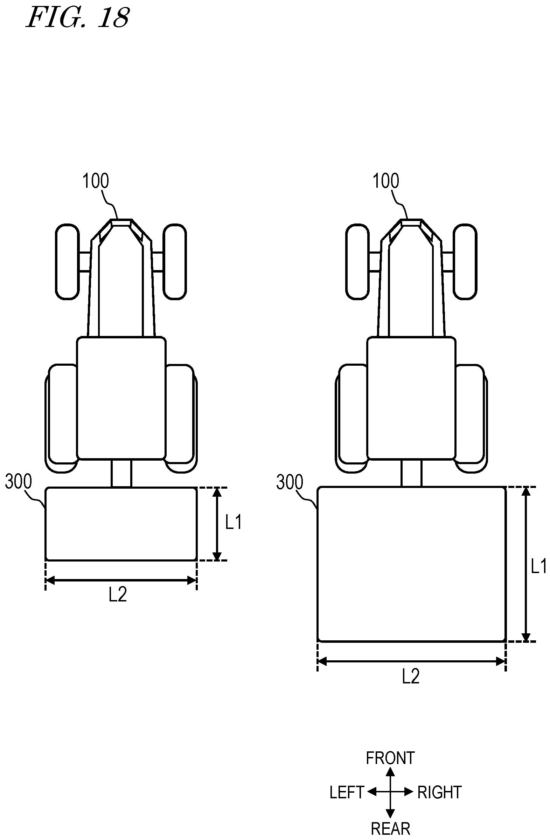

Next, an example of setting the maximum steering angle θₘₐₓ in accordance with the size of the implement **300** connected to the work vehicle **100** will be described. FIG. **18** is a diagram showing the work vehicle **100** with the implement **300** connected thereto. Information of the size of the implement **300** may be input by the user who manipulates the operation terminal **200** (FIG. **2**), and stored to the storage device **170,** for example. Moreover, information of the size of the implement **300** may be transmitted from the implement **300** to the work vehicle **100** via the communicators **190** and **390,** and stored to the storage device **170.**

The size of an implement **300** shown on the right side of FIG. **18** is greater than an implement **300** shown on the left side of FIG. **18****.** The ECU **184** sets the maximum steering angle θₘₐₓ to a smaller value when the size of the implement **300** is large than when it is small. For example, when the length **L1** of the implement **300** along the front-rear direction is large, the maximum steering angle θₘₐₓ is set to a smaller value than when it is small. Moreover, when the length **L2** of the implement **300** along the right-left direction is large, for example, the maximum steering angle θₘₐₓ is set to a smaller value than when it is small.

For example, as shown by the solid lines in FIG. **16****,** the maximum steering angle θₘₐₓ may be decreased in a discrete manner as the size of the implement **300** increases. Alternatively, as shown by the dot-dash line in FIG. **16****,** the maximum steering angle θₘₐₓ may be decreased in a continuous manner as the size of the implement **300** increases. As a result, a maximum steering angle θₘₐₓ that is suitable for the size of the implement **300** can be set. By reducing the maximum steering angle θₘₐₓ when the size of the implement **300** (length along the front-rear direction and/or length along the right-left direction) is large, the work vehicle **100** and the implement **300** can be restrained from coming into contact with the rows of trees **20.**

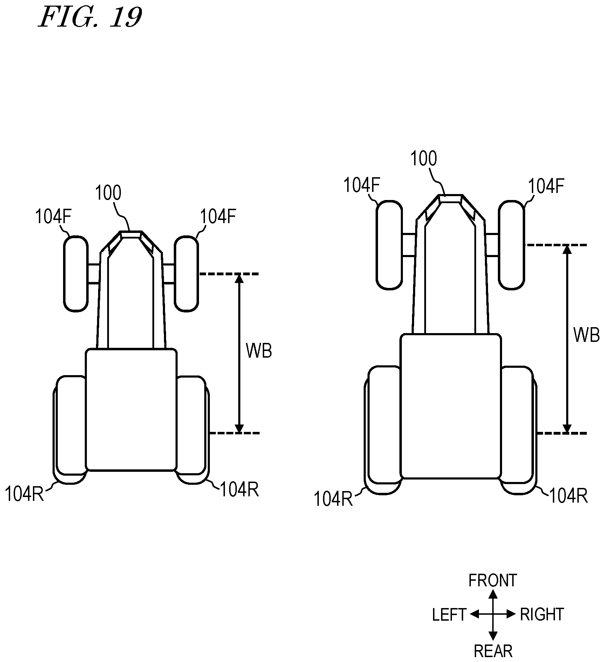

Next, an example of setting the maximum steering angle θₘₐₓ in accordance with the wheelbase of the work vehicle **100** will be described. FIG. **19** is a diagram showing a wheelbase **WB** of the work vehicle **100.**

The wheelbase **WB** of a work vehicle **100** shown on the right side of FIG. **19** is larger than the wheelbase **WB** of a work vehicle **100** shown on the left side of FIG. **19****.** When the wheelbase **WB** of the work vehicle **100** is large, the ECU **184** sets the maximum steering angle θₘₐₓ to a larger value than when it is small.

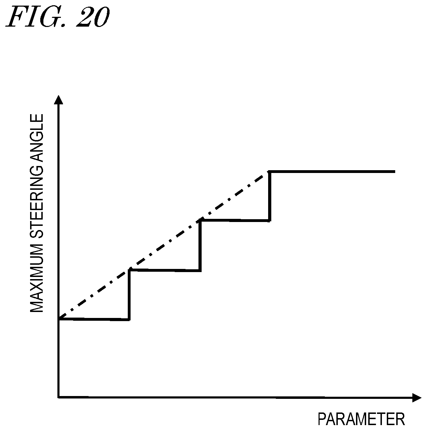

FIG. **20** is a diagram showing an example of a method of setting the maximum steering angle θₘₐₓ. In FIG. **20****,** the vertical axis represents the maximum steering angle θₘₐₓ, and the horizontal axis represents a parameter. The parameter is a parameter concerning the surrounding environment of the work vehicle **100** and/or the work vehicle **100.** Herein, the parameter is the wheelbase **WB.**

For example, the ECU **184** makes the maximum steering angle θₘₐₓ larger when the wheelbase **WB** is large than when it is small. For example, as shown by solid lines in FIG. **20****,** the maximum steering angle θₘₐₓ may be increased in a discrete manner as the wheelbase **WB** increases. Alternatively, as shown by a dot-dash line in FIG. **20****,** the maximum steering angle θₘₐₓ may be increased in a continuous manner as the wheelbase **WB** increases. When the wheelbase **WB** is large, the turning radius is likely to become large. By increasing the maximum steering angle θₘₐₓ when the wheelbase **WB** is large, the minimum turning radius can be reduced. As a result, the work vehicle **100** can be restrained from coming into contact with the rows of trees **20.**

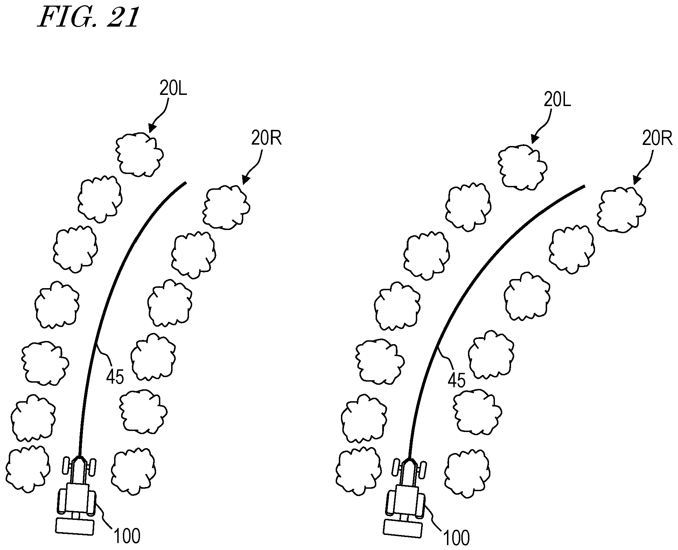

Next, an example of setting the maximum steering angle θₘₐₓ in accordance with the curvature of the row of trees **20** will be described. FIG. **21** is a diagram showing rows of trees **20.** The ECU **184** changes the maximum steering angle θₘₐₓ in accordance with curvatures of two rows of trees **20L** and **20R.** The curvature of a target path **45** that is set between the rows of trees **20L** and **20R** changes in accordance with the respective curvatures of the rows of trees **20L** and **20R.** The respective curvatures of the rows of trees **20L** and **20R** can be computed from the approximate curves **41R** and **41L** described in FIG. **12****,** for example. Moreover, a mean value of the curvatures of the rows of trees **20L** and **20R** may be adopted as the curvature of the target path **45** that is set between the rows of trees **20L** and **20R.**

The curvature of the row of trees **20** shown on the right side of FIG. **21** is larger than the curvature of the row of trees **20** shown on the left side of FIG. **21****.** When the curvature of the row of trees **20** is large, the ECU **184** sets the maximum steering angle θₘₐₓ to a larger value than when it is small.

For example, as shown by the solid lines in FIG. **20****,** the maximum steering angle θₘₐₓ may be increased in a discrete manner as the curvature of the row of trees **20** increases. Alternatively, as shown by the dot-dash line in FIG. **20****,** the maximum steering angle θₘₐₓ may be increased in a continuous manner as the curvature of the row of trees **20** increases. As a result, a maximum steering angle θₘₐₓ that is suitable for the curvature of the row of trees **20** can be set. By increasing the maximum steering angle θₘₐₓ when the curvature of the row of trees **20** is large, the work vehicle **100** can be restrained from coming into contact with the rows of trees **20.**

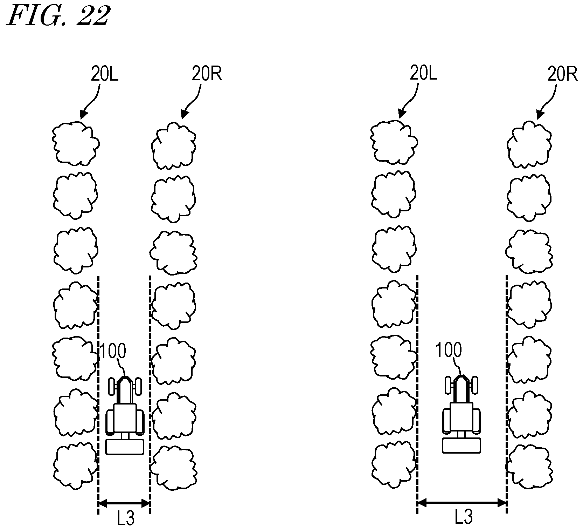

Next, an example of setting the maximum steering angle θₘₐₓ in accordance with the size of width between two rows of trees **20** will be described. FIG. **22** is a diagram showing rows of trees **20.** The ECU **184** changes the maximum steering angle θₘₐₓ in accordance with the size of the width **L3** between the two rows of trees **20L** and **20R.**

The sensor data that is output from the LiDAR sensor(s) **140** contains point cloud data representing the rows of trees **20.** From within the point cloud data representing the rows of trees **20,** the ECU **184** extracts a point that is located closer to the work vehicle **100.** By computing a distance between the point extracted from within the point cloud data representing the row of trees **20L** and the point extracted from within the point cloud data representing the row of trees **20R,** a value of the width **L3** between the two rows of trees **20L** and **20R** can be acquired.

The width **L3** shown on the left side of FIG. **22** is smaller than the width **L3** shown on the right side of FIG. **22****.** When the width **L3** is small, the ECU **184** sets the maximum steering angle θₘₐₓ to a smaller value than when it is large.

For example, as shown by the solid lines in FIG. **20****,** the maximum steering angle θₘₐₓ may be decreased in a discrete manner as the width **L3** decreases. Alternatively, as shown by the dot-dash line in FIG. **20****,** the maximum steering angle θₘₐₓ may be decreased in a continuous manner as the width **L3** decreases. As a result, a maximum steering angle θₘₐₓ that is suitable for the width **L3** between the rows of trees **20L** and **20R** can be set. By decreasing the maximum steering angle θₘₐₓ when the width **L3** is small, the work vehicle **100** can be restrained from coming into contact with the rows of trees **20.**

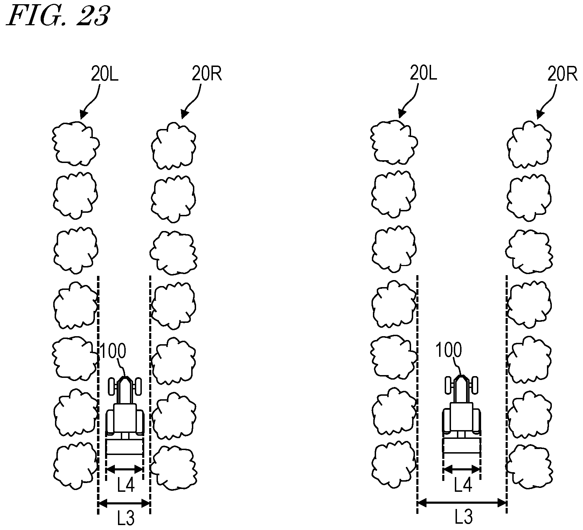

Next, an example of setting the maximum steering angle θₘₐₓ in accordance with a value D of difference between the width **L3** between the rows of trees **20L** and **20R** and the width **L4** of the work vehicle **100** will be described. FIG. **23** is a diagram showing rows of trees **20** and the work vehicle **100.** The ECU **184** changes the maximum steering angle θₘₐₓ in accordance with the value of difference D between the width **L3** and the width **L4.**

Information of the width **L4** of the work vehicle **100** may be previously stored in the storage device **170.** Information of the width **L4** of the work vehicle **100** may be input by the user who manipulates the operation terminal **200** (FIG. **2****),** and stored to the storage device **170,** for example.

When an implement **300** whose width is larger than that of the work vehicle **100** is connected to the work vehicle **100,** a value of the width of the implement **300** may be adopted as the width **L4** of the work vehicle **100.** Information of the size of the implement **300** may be input by the user who manipulates the operation terminal **200** (FIG. **2**), and stored to the storage device **170,** for example. Moreover, information of the size of the implement **300** may be transmitted from the implement **300** to the work vehicle **100** via the communicators **190** and **390,** and stored to the storage device **170.**

The difference value D in the example shown on the left side of FIG. **23** is smaller than the difference value D in the example shown on the right side of FIG. **23****.** When the difference value D is small, the ECU **184** sets the maximum steering angle θₘₐₓ to a smaller value than when it is large.

For example, as shown in by the solid lines in FIG. **20****,** the maximum steering angle θₘₐₓ may be decreased in a discrete manner as the difference value D decreases. Alternatively, as shown by the dot-dash line in FIG. **20****,** the maximum steering angle θₘₐₓ may be decreased in a continuous manner as the difference value D decreases. As a result, a maximum steering angle θₘₐₓ that is suitable for the magnitude of the difference value D can be set. By decreasing the maximum steering angle θₘₐₓ when the difference value D is small, the work vehicle **100** can be restrained from coming into contact with the rows of trees **20.**

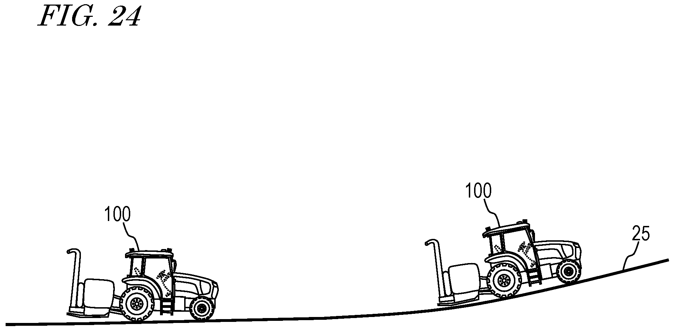

Next, an example of setting the maximum steering angle θₘₐₓ in accordance with an angle of dip of the ground surface of a current location of the work vehicle **100** will be described. FIG. **24** is a diagram showing a work vehicle **100** and a ground surface **25** on which the work vehicle **100** travels. The ECU **184** changes the maximum steering angle θₘₐₓ in accordance with the angle of dip of the ground surface of the current location of the work vehicle **100.** The ECU **184** can compute the angle of dip based on an output signal from the IMU **115** (FIG. **2**), for example. When the ground surface of the current location of the work vehicle **100** has a large angle of dip, the ECU **184** sets the maximum steering angle θₘₐₓ to a smaller value than when it is small.

For example, as shown by the solid lines in FIG. **16****,** the maximum steering angle θₘₐₓ may be decreased in a discrete manner as the angle of dip increases. Alternatively, as shown by the dot-dash line in FIG. **16****,** the maximum steering angle θₘₐₓ may be decreased in a continuous manner as the angle of dip increases. As a result, a maximum steering angle θₘₐₓ that is suitable for the angle of dip of the current location of the work vehicle **100** can be set. By decreasing the maximum steering angle θₘₐₓ when the angle of dip is large, driving stability can be improved.

### [3. other embodiments]

In the above embodiment, the one or more exterior sensors included in the work vehicle are a LiDAR sensor(s) to output two-dimensional or three-dimensional point cloud data as sensor data through scanning of a laser beam. However, the exterior sensors are not limited to such LiDAR sensors. For example, other types of sensors such as flash-type LiDAR sensors or image sensors may be used. Such other types of sensors may be used in combination with scan-type LiDAR sensors.

Although in the above embodiment the work vehicle performs self-traveling between rows of trees in an orchard, the work vehicle may be used for the purposes of self-traveling between crop rows other than rows of trees. For example, the technique according to the present disclosure is applicable to a work vehicle, such as a tractor, that performs self-traveling among a plurality of crop rows in an agricultural field.

A device that performs the processing needed for the self-traveling of the work vehicle according to the above embodiment may be mounted to a work vehicle lacking such functionality as an add-on. For example, a control unit to control the operation of a work vehicle that travels among a plurality of crop rows may be attached to the work vehicle in use.

Thus, the present disclosure encompasses work vehicles, control methods, and computer programs as recited in the following Items.

### [Item 1]

A work vehicle **100** to perform self-traveling among a plurality of crop rows **20,** the work vehicle **100** comprising:
wheels responsible for steering **104F;**
a steering device **106** to change a steering angle of the wheels responsible for steering **104F;**
an exterior sensor **140** to output sensor data indicating a distribution of geographic features around the work vehicle **100;** and
a controller **160** to control self-traveling of the work vehicle **100,** wherein
the controller **160** is operable to:
   set a maximum steering angle θₘₐₓ for the wheels responsible for steering **104F,** based on a state of at least one of the work vehicle **100** and a surrounding environment of the work vehicle **100;**
   detect two crop rows **20** existing on opposite sides of the work vehicle **100** based on the sensor data;
   set a target path **45** for the work vehicle **100** in between the two crop rows **20;**
   compute a target steering angle θₙ for the wheels responsible for steering **104F** that is aimed at causing the work vehicle **100** to follow the target path **45;**
   limit a value of the target steering angle θₙ to equal to or smaller than the maximum steering angle θₘₐₓ when the computed target steering angle θₙ is greater than the maximum steering angle θₘₐₓ; and
control the steering device **106** so that the steering angle θᵣ of the wheels responsible for steering **104F** equals the target steering angle θₙ.

In one embodiment, a maximum steering angle θₘₐₓ for the wheels responsible for steering **104F** is set based on a state of at least one of the work vehicle **100** and the surrounding environment of the work vehicle **100,** and the steering angle θᵣ of the wheels responsible for steering **104F** is controlled so as to be equal to or smaller than the maximum steering angle θₘₐₓ. By setting the maximum steering angle θₘₐₓ based on a state of at least one of the work vehicle **100** and the surrounding environment, the work vehicle **100** can be restrained from coming into contact with the crop rows **20.** By controlling the steering angle θᵣ of the wheels responsible for steering **104F** so as to be equal to or smaller than the maximum steering angle θₘₐₓ, the work vehicle **100** can be restrained from coming into contact with the crop rows **20,** and driving stability can be improved.

### [Item 2]

The work vehicle **100** of Item 1, wherein the controller **160** is operable to:
when the computed target steering angle θₙ is equal to or smaller than the maximum steering angle θₘₐₓ, update a value of the target steering angle θₙ to be used for controlling the steering device **106** from a value of a previous target steering angle θₙ₋₁ to a value of the computed target steering angle θₙ; and,
when the computed target steering angle θₙ is greater than the maximum steering angle θₘₐₓ, maintain a value of a previous target steering angle θₙ₋₁ as a value of the target steering angle θₙ to be used for controlling the steering device **106.**
When the computed target steering angle θₙ is greater than the maximum steering angle θₘₐₓ, the value of the previous target steering angle θₙ₋₁ is maintained, whereby the steering angle of the wheels responsible for steering **104F** can be controlled so as to be equal to or smaller than the maximum steering angle θₘₐₓ.

### [Item 3]

The work vehicle **100** of Item 1, wherein the controller **160** is operable to:
when the computed target steering angle θₙ is equal to or smaller than the maximum steering angle θₘₐₓ, update a value of the target steering angle θₙ to be used for controlling the steering device **106** from a value of a previous target steering angle θₙ₋₁ to a value of the computed target steering angle θₙ; and,
when the computed target steering angle θₙ is greater than the maximum steering angle θₘₐₓ, adopt a value of the maximum steering angle θₘₐₓ as a value of the target steering angle θₙ to be used for controlling the steering device **106.**
When the computed target steering angle θₙ is greater than the maximum steering angle θₘₐₓ, adopting the maximum steering angle θₘₐₓ, i.e., the largest adoptable value, makes it easier for the work vehicle **100** to follow the target path **45.**

### [Item 4]

The work vehicle **100** of any of Items 1 to 3, wherein the controller **160** sets the maximum steering angle θₘₐₓ based on at least one of: a traveling speed of the work vehicle **100,** a wheelbase WB of the work vehicle **100,** a size of an implement **300** connected to the work vehicle **100,** a curvature of the two crop rows **20,** an angle of dip of a current location of the work vehicle **100,** a size of width between the two crop rows **20,** and a difference between the width between the two crop rows **20** and a width of the work vehicle **100.**

A maximum steering angle θₘₐₓ that is suitable for the surrounding environment of the work vehicle **100** and/or the work vehicle **100** can be set.

### [Item 5]

The work vehicle **100** of any of Items 1 to 4, wherein the controller **160**
changes the maximum steering angle θₘₐₓ in accordance with a traveling speed of the work vehicle **100,** and
makes the maximum steering angle θₘₐₓ smaller when the traveling speed is large than when the traveling speed is small.

A maximum steering angle θₘₐₓ that is suitable for the magnitude of the traveling speed can be set. By decreasing the maximum steering angle θₘₐₓ when the traveling speed is large, driving stability can be improved.

### [Item 6]

The work vehicle **100** of any of Items 1 to 4, wherein the controller **160**
changes the maximum steering angle θₘₐₓ in accordance with a size of an implement **300** connected to the work vehicle **100,** and
makes the maximum steering angle θₘₐₓ smaller when the size of the implement **300** is large than when the size of the implement **300** is small.

A maximum steering angle θₘₐₓ that is suitable for the size of the implement **300** can be set. When the size of the implement **300** (length along the front-rear direction and/or length along the width direction) is large, the work vehicle **100** and the implement **300** can be restrained from coming into contact with the crop rows **20** by reducing the maximum steering angle θₘₐₓ

### [Item 7]

The work vehicle **100** of any of Items 1 to 4, wherein the controller **160**
changes the maximum steering angle θₘₐₓ in accordance with a curvature of the two crop rows **20,** and
makes the maximum steering angle θₘₐₓ larger when the curvature is large than when the curvature is small.

A maximum steering angle θₘₐₓ that is suitable for the curvature(s) of the crop rows **20** can be set. By increasing the maximum steering angle θₘₐₓ when the curvature(s) of the crop rows **20** is large, the work vehicle **100** can be restrained from coming into contact with the crop rows **20.**

### [Item 8]

The work vehicle **100** of any of Items 1 to 4, wherein the controller **160**
changes the maximum steering angle θₘₐₓ in accordance with an angle of dip of a current location of the work vehicle **100,** and
makes the maximum steering angle θₘₐₓ smaller when the angle of dip is large than when the angle of dip is small.

A maximum steering angle θₘₐₓ that is suitable for the angle of dip of the current location of the work vehicle **100** can be set. By decreasing the maximum steering angle θₘₐₓ when the angle of dip is large, driving stability can be improved.

### [Item 9]

The work vehicle **100** of any of Items 1 to 4, wherein the controller **160**
changes the maximum steering angle θₘₐₓ in accordance with a size of width between the two crop rows **20,** and
makes the maximum steering angle θₘₐₓ smaller when the width between the two crop rows **20** is small than when the width between the two crop rows **20** is large.

A maximum steering angle θₘₐₓ that is suitable for the width between two crop rows **20** can be set. By decreasing the maximum steering angle θₘₐₓ when the width between two crop rows **20** is small, the work vehicle **100** can be restrained from coming into contact with the crop rows **20.**

### [Item 10]

The work vehicle **100** of any of Items 1 to 4, wherein the controller **160**
changes the maximum steering angle θₘₐₓ in accordance with a difference between a width between the two crop rows **20** and a width of the work vehicle **100,** and
makes the maximum steering angle θₘₐₓ smaller when the difference is small than when the difference is large.

A maximum steering angle θₘₐₓ that is suitable for the magnitude of the difference between the width between crop rows **20** and the width of the work vehicle **100** can be set. By decreasing the maximum steering angle θₘₐₓ when the difference is small, the work vehicle **100** can be restrained from coming into contact with the crop rows **20.**

### [Item 11]

The work vehicle **100** of any of Items 1 to 4, wherein the controller **160** sets the maximum steering angle θₘₐₓ in accordance with a wheelbase **WB** of the work vehicle **100.**

A maximum steering angle θₘₐₓ that is suitable for the wheelbase **WB** of the work vehicle **100** can be set. For example, by increasing the maximum steering angle θₘₐₓ for a work vehicle **100** whose wheelbase **WB** is large, the work vehicle **100** can be restrained from coming into contact with the crop rows **20.**

### [Item 12]

The work vehicle **100** of any of Items 1 to 11, wherein, when determining an impossibility to cause the work vehicle **100** to follow the target path **45,** the controller **160** performs a control of halting the work vehicle **100.**

By halting the work vehicle **100** when determining an impossibility to cause the work vehicle **100** to follow the target path **45,** the work vehicle **100** can be restrained from coming into contact with the crop rows **20.**

### [Item 13]

The work vehicle **100** of Item 5, wherein the controller **160** is operable to:
when determining an impossibility to cause the work vehicle **100** to follow the target path **45,** perform a control of making the traveling speed of the work vehicle **100** smaller than a current traveling speed;
change the maximum steering angle θₘₐₓ based on the reduced traveling speed; and
determine the target steering angle based on the changed maximum steering angle θₘₐₓ.

When determining that the work vehicle **100** cannot be made to follow the target path **45,** the maximum steering angle θₘₐₓ can be increased by reducing the traveling speed. By increasing the maximum steering angle θₘₐₓ, the target steering angle θₙ can be increased, thereby making it easier for the work vehicle **100** to follow the target path **45.**

### [Item 14]

A control method of controlling a steering angle of a work vehicle **100** to perform self-traveling among a plurality of crop rows **20,** the control method performing:
setting a maximum steering angle θₘₐₓ for wheels responsible for steering **104F** of the work vehicle **100,** based on a state of at least one of the work vehicle **100** and a surrounding environment of the work vehicle **100;**
detecting two crop rows **20** existing on opposite sides of the work vehicle **100** based on sensor data output from an exterior sensor **140,** the sensor data indicating a distribution of geographic features around the work vehicle **100;**
setting a target path **45** for the work vehicle **100** in between the two crop rows **20;**
computing a target steering angle θₙ for the wheels responsible for steering **104F** that is aimed at causing the work vehicle **100** to follow the target path **45;**
limiting a value of the target steering angle θₙ to equal to or smaller than the maximum steering angle θₘₐₓ when the computed target steering angle θₙ is greater than the maximum steering angle θₘₐₓ; and
controlling a steering device of the work vehicle **100** so that the steering angle θᵣ of the wheels responsible for steering **104F** equals the target steering angle θₙ.

In one embodiment, a maximum steering angle θₘₐₓ for the wheels responsible for steering **104F** is set based on a state of at least one of the work vehicle **100** and the surrounding environment of the work vehicle **100,** and the steering angle θᵣ of the wheels responsible for steering **104F** is controlled so as to be equal to or smaller than the maximum steering angle θₘₐₓ. By setting the maximum steering angle θₘₐₓ based on a state of at least one of the work vehicle **100** and the surrounding environment, the work vehicle **100** can be restrained from coming into contact with the crop rows **20.** By controlling the steering angle θᵣ of the wheels responsible for steering **104F** so as to be equal to or smaller than the maximum steering angle θₘₐₓ, the work vehicle **100** can be restrained from coming into contact with the crop rows **20,** and driving stability can be improved.

### [Item 15]

A computer program for causing a computer to control a steering angle of a work vehicle **100** to perform self-traveling among a plurality of crop rows **20,**
the computer program causing the computer to execute:
setting a maximum steering angle θₘₐₓ for wheels responsible for steering **104F** of the work vehicle **100,** based on a state of at least one of the work vehicle **100** and a surrounding environment of the work vehicle **100;**
detecting two crop rows **20** existing on opposite sides of the work vehicle **100** based on sensor data output from an exterior sensor **140,** the sensor data indicating a distribution of geographic features around the work vehicle **100;**
setting a target path **45** for the work vehicle **100** in between the two crop rows **20;**
computing a target steering angle θₙ for the wheels responsible for steering **104F** that is aimed at causing the work vehicle **100** to follow the target path **45;**
limiting a value of the target steering angle θₙ to equal to or smaller than the maximum steering angle θₘₐₓ when the computed target steering angle θₙ is greater than the maximum steering angle θₘₐₓ; and
controlling a steering device of the work vehicle **100** so that the steering angle θᵣ of the wheels responsible for steering **104F** equals the target steering angle θₙ.

In one embodiment, a maximum steering angle θₘₐₓ for the wheels responsible for steering **104F** is set based on a state of at least one of the work vehicle **100** and the surrounding environment of the work vehicle **100,** and the steering angle θᵣ of the wheels responsible for steering **104F** is controlled so as to be equal to or smaller than the maximum steering angle θₘₐₓ. By setting the maximum steering angle θₘₐₓ based on a state of at least one of the work vehicle **100** and the surrounding environment, the work vehicle **100** can be restrained from coming into contact with the crop rows **20.** By controlling the steering angle θᵣ of the wheels responsible for steering **104F** so as to be equal to or smaller than the maximum steering angle θₘₐₓ, the work vehicle **100** can be restrained from coming into contact with the crop rows **20,** and driving stability can be improved.

### INDUSTRIAL APPLICABILITY

The technique according to the present disclosure is applicable to a work vehicle, e.g., a tractor, that moves in an environment in which a plurality of crop rows (e.g., rows of trees) exist, such as an orchard, an agricultural field, or a mountain forest.

### REFERENCE SIGNS LIST

**20**...row of trees, **30**...target path, **40**...obstacle map, **41R, 41L**...row of trees, **45**...target path, **46**...turning path, **48**...boundary, **50**...headland, **80**...network, **100**...work vehicle, **101**...vehicle body, **102**...prime mover, **103...**transmission, **104**...wheel, **105**...cabin, **106**...steering device, **107**...driver's seat, **108**...linkage device, **110**...GNSS unit, **115**...inertial measurement unit, **116**...processing circuit, **120...**camera, **130**...obstacle sensor, **140**...LiDAR sensor, **141**...laser unit, **142**...laser light source, **143**...photodetector, **144**...motor, **145**...control circuit, **146**...signal processing circuit, **147**...memory, **150**...sensors, **152**...steering wheel sensor, **154**...steering angle sensor, **156**...wheel axis sensor, **160**... control system (controller), **170**...storage device, **180**...controller, **181** to **184**...ECU, **190**... communicator, **200**...operation terminal, **210**... operation switches, **240**...drive device, **300**... implement, **340**...drive device, **380**...controller, **390**... communicator, **400**...terminal device

## Claims

1. A work vehicle to perform self-traveling among a plurality of crop rows, the work vehicle comprising:
wheels responsible for steering;
a steering device to change a steering angle of the wheels responsible for steering;
an exterior sensor to output sensor data indicating a distribution of geographic features around the work vehicle; and
a controller to control self-traveling of the work vehicle, wherein
the controller is operable to:
set a maximum steering angle for the wheels responsible for steering, based on a state of at least one of the work vehicle and a surrounding environment of the work vehicle;
detect two crop rows existing on opposite sides of the work vehicle based on the sensor data;
set a target path for the work vehicle in between the two crop rows;
compute a target steering angle for the wheels responsible for steering that is aimed at causing the work vehicle to follow the target path;
limit a value of the target steering angle to equal to or smaller than the maximum steering angle when the computed target steering angle is greater than the maximum steering angle; and
control the steering device so that the steering angle of the wheels responsible for steering equals the target steering angle.

2. The work vehicle of claim 1, wherein the controller is operable to:
when the computed target steering angle is equal to or smaller than the maximum steering angle, update a value of the target steering angle to be used for controlling the steering device from a value of a previous target steering angle to a value of the computed target steering angle; and,
when the computed target steering angle is greater than the maximum steering angle, maintain a value of a previous target steering angle as a value of the target steering angle to be used for controlling the steering device.

3. The work vehicle of claim 1, wherein the controller is operable to:
when the computed target steering angle is equal to or smaller than the maximum steering angle, update a value of the target steering angle to be used for controlling the steering device from a value of a previous target steering angle to a value of the computed target steering angle; and,
when the computed target steering angle is greater than the maximum steering angle, adopt a value of the maximum steering angle as a value of the target steering angle to be used for controlling the steering device.

4. The work vehicle of any of claims 1 to 3, wherein the controller sets the maximum steering angle based on at least one of: a traveling speed of the work vehicle, a wheelbase of the work vehicle, a size of an implement connected to the work vehicle, a curvature of the two crop rows, an angle of dip of a current location of the work vehicle, a size of width between the two crop rows, and a difference between the width between the two crop rows and a width of the work vehicle.

5. The work vehicle of any of claims 1 to 3, wherein the controller
changes the maximum steering angle in accordance with a traveling speed of the work vehicle, and
makes the maximum steering angle smaller when the traveling speed is large than when the traveling speed is small.

6. The work vehicle of any of claims 1 to 3, wherein the controller
changes the maximum steering angle in accordance with a size of an implement connected to the work vehicle, and
makes the maximum steering angle smaller when the size of the implement is large than when the size of the implement is small.

7. The work vehicle of any of claims 1 to 3, wherein the controller
changes the maximum steering angle in accordance with a curvature of the two crop rows, and
makes the maximum steering angle larger when the curvature is large than when the curvature is small.

8. The work vehicle of any of claims 1 to 3, wherein the controller
changes the maximum steering angle in accordance with an angle of dip of a current location of the work vehicle, and
makes the maximum steering angle smaller when the angle of dip is large than when the angle of dip is small.

9. The work vehicle of any of claims 1 to 3, wherein the controller
changes the maximum steering angle in accordance with a size of width between the two crop rows, and
makes the maximum steering angle smaller when the width between the two crop rows is small than when the width between the two crop rows is large.

10. The work vehicle of any of claims 1 to 3, wherein the controller
changes the maximum steering angle in accordance with a difference between a width between the two crop rows and a width of the work vehicle, and
makes the maximum steering angle smaller when the difference is small than when the difference is large.

11. The work vehicle of any of claims 1 to 3, wherein the controller sets the maximum steering angle in accordance with a wheelbase of the work vehicle.

12. The work vehicle of any of claims 1 to 3, wherein, when determining an impossibility to cause the work vehicle to follow the target path, the controller performs a control of halting the work vehicle.

13. The work vehicle of claim 5, wherein the controller is operable to:
when determining an impossibility to cause the work vehicle to follow the target path, perform a control of making the traveling speed of the work vehicle smaller than a current traveling speed;
change the maximum steering angle based on the reduced traveling speed; and
determine the target steering angle based on the changed maximum steering angle.

14. A control method of controlling a steering angle of a work vehicle to perform self-traveling among a plurality of crop rows, the control method performing:
setting a maximum steering angle for wheels responsible for steering of the work vehicle, based on a state of at least one of the work vehicle and a surrounding environment of the work vehicle;
detecting two crop rows existing on opposite sides of the work vehicle based on sensor data output from an exterior sensor, the sensor data indicating a distribution of geographic features around the work vehicle;
setting a target path for the work vehicle in between the two crop rows;
computing a target steering angle for the wheels responsible for steering that is aimed at causing the work vehicle to follow the target path;
limiting a value of the target steering angle to equal to or smaller than the maximum steering angle when the computed target steering angle is greater than the maximum steering angle; and
controlling a steering device of the work vehicle so that the steering angle of the wheels responsible for steering equals the target steering angle.

15. A computer program for causing a computer to control a steering angle of a work vehicle to perform self-traveling among a plurality of crop rows,
the computer program causing the computer to execute:
setting a maximum steering angle for wheels responsible for steering of the work vehicle, based on a state of at least one of the work vehicle and a surrounding environment of the work vehicle;
detecting two crop rows existing on opposite sides of the work vehicle based on sensor data output from an exterior sensor, the sensor data indicating a distribution of geographic features around the work vehicle;
setting a target path for the work vehicle in between the two crop rows;
computing a target steering angle for the wheels responsible for steering that is aimed at causing the work vehicle to follow the target path;
limiting a value of the target steering angle to equal to or smaller than the maximum steering angle when the computed target steering angle is greater than the maximum steering angle; and
controlling a steering device of the work vehicle so that the steering angle of the wheels responsible for steering equals the target steering angle.
